Europäisches Patentamt

European Patent Office

Office européen des brevets

(19)

(11) Numéro de publication: **0 282 388**
**A1**

# (12) DEMANDE DE BREVET EUROPEEN

(21) Numéro de dépôt: 88400426.8

(22) Date de dépôt: 24.02.88

(51) Int. Cl.⁴: **B 08 B 1/04**
**B 23 G 1/32**

(30) Priorité: 26.02.87 FR 8702565

(43) Date de publication de la demande:
14.09.88 Bulletin 88/37

(84) Etats contractants désignés: **BE DE ES IT**

(71) Demandeur: **CREATION DE MECANISMES
D'AUTOMATISMES ET D'ASSERVISSEMENTS
123, rue de Petit Vaux
F-91360 EPINAY-SUR-ORGE (FR)**

(72) Inventeur: **Hanser, Patrick Edouard Lucien
22, rue des Camaldules
F-91330 Yerres (FR)**

(74) Mandataire: **Martin, Jean-Jacques et al
Cabinet REGIMBEAU 26, Avenue Kléber
F-75116 Paris (FR)**

(54) Dispositif de brossage d'alesages taraudes.

(57) La présente invention concerne un dispositif de brossage d'alésages taraudés. Selon l'invention le dispositif comprend un équipage (100) muni d'une brosse (501), entraîné en rotation autour d'un axe principal (502) parallèle à l'axe de l'alésage taraudé, et des moyens auxiliaires (700) aptes à déplacer simultanément l'équipage (100) selon un mouvement hélicoïdal centré sur l'axe de l'alésage.

FIG.11

## Description

"DISPOSITIF DE BROSSAGE D'ALESAGES TARAUDES."

La présente invention concerne le domaine des dispositifs de brossage.

La présente invention concerne plus précisément un dispositif de brossage conçu pour brosser des alésages taraudés, notamment les alésages taraudés entourant les orifices d'accès pour cuves et destinés à fixer les trappes obturant ces orifices, en particulier mais non exclusivement pour générateurs de vapeur et pressuriseurs de centrales nucléaires.

La présente invention trouve application pour le brossage des alésages taraudés associés aux trous d'homme, trous d'oeil et trous de poing, ces différents orifices se distinguant seulement par leur dimension.

Les différents dispositifs de brossage jusqu'ici proposés ne donnent pas pleinement satisfaction.

Un premier but de la présente invention est de proposer un dispositif de brossage présentant un fonctionnement entièrement automatique, c'est-à-dire qui ne requiert pas d'intervention manuelle après mise en place du dispositif de brossage.

Un autre but de la présente invention est de proposer un dispositif de brossage léger en poids.

Un autre but de la présente invention est de proposer un dispositif de brossage adapté pour être mis en place rapidement et avec précision.

Un autre but de la présente invention est de proposer un dispositif de brossage susceptible d'assurer, sans difficulté particulière, le brossage de divers alésages taraudés présentant des pas différents.

Ces différents buts sont atteints selon la présente invention grâce à un dispositif de brossage comprenant un équipage muni d'une brosse, entraîné en rotation autour d'un axe principal parallèle à l'axe de l'alésage taraudé et des moyens auxiliaires aptes à déplacer simultanément l'équipage selon un mouvement hélicoïdal centré sur l'axe de l'alésage. Comme cela sera explicité par la suite, grâce au mouvement hélicoïdal imprimé à l'équipage muni de la brosse, on obtient dans le cadre de la présente invention, un brossage optimum des filets de l'alésage taraudé.

De préférence, selon l'invention, l'équipage muni de la brosse et les moyens auxiliaires sont entraînés par le même moteur pneumatique.

De façon avantageuse, un système de débrayage limiteur de couple est inséré sur la chaîne de transmission de mouvement des moyens auxiliaires.

Les moyens auxiliaires comprennent de préférence une vis dont l'axe coïncide avec l'axe de l'alésage, la vis étant entraînée à rotation autour de cet axe, engrenant avec un écrou porté par un carter fixe et portant l'équipage à rotation autour de l'axe principal, parallèle à l'axe de l'alésage et excentré par rapport à celui-ci.

La présente invention propose également des moyens support de dispositif de brossage destinés à être fixé dans un orifice ménagé dans une paroi, par exemple dans la paroi d'un générateur de vapeur, les moyens support comprenant un châssis fixe portant, d'une part, un système de mors adapté pour venir en appui contre une première surface de la paroi, d'autre part, une pluralité de griffes associées à des moyens d'entraînement aptes à déplacer les griffes entre une position de repos escamotée dans laquelle les griffes peuvent traverser librement l'orifice et une position de travail en extension dans laquelle les griffes viennent en appui contre la seconde surface de la paroi, sur la périphérie de l'orifice.

Grâce à cette disposition on obtient, dans le cadre de la présente invention, un positionnement sûr, précis et automatique du dispositif de brossage.

Selon une autre caractéristique avantageuse de l'invention, il est prévu en outre un châssis mobile qui porte les moyens de brossage, le châssis mobile étant supporté libre de rotation autour de l'axe de l'orifice par le châssis fixe précité, ainsi que des moyens d'entraînement secondaire aptes à assurer un pivotement contrôlé du châssis mobile autour de l'axe de l'orifice.

D'autres caractéristiques, buts et avantages de la présente invention apparaîtront à la lecture de la description détaillée qui va suivre et en regard des dessins annexés donnés à titre d'exemple non limitatif et sur lesquels :

- la figure 1 représente une vue générale schématique en coupe longitudinale passant par l'axe d'un orifice de cuve, des moyens support conformes à la présente invention, selon des plans de coupe non coplanaires référencés I-I sur la figure 4,

- la figure 2 représente selon une vue identique la structure du châssis fixe des moyens supports ainsi que des mors et griffes associés conformes à la présente invention,

- la figure 3 représente selon une vue identique la structure du châssis mobile des moyens support conformes à la présente invention,

- la figure 4 représente une vue axiale des moyens support conformes à la présente invention selon une vue illustrée par la flèche référencée IV sur la figure 1, certains couvercles de carters étant retirés pour la clarté de l'illustration,

- la figure 5 représente une vue détaillée, partiellement en coupe, selon des plans de coupe non coplanaires référencés V-V sur la figure 1, d'une biellette élastique associée aux griffes,

- la figure 6 représente une vue de détail du châssis mobile des moyens support selon un plan de coupe référencé VI-VI sur la figure 1,

- la figure 7 représente une autre vue de détail du châssis mobile des moyens support selon des plans de coupe non coplanaires référencés VII-VII sur la figure 4,

- la figure 8 représente une vue de détail de moyens associés aux griffes selon des plans de coupe non coplanaires référencés VIII-VIII sur la figure 1,

- la figure 9 représente une autre vue de détail du châssis fixe des moyens support selon un plan de coupe référencé IX-IX sur la figure 1,

- la figure 10 représente une autre vue en coupe transversale du châssis fixe des moyens support selon un plan de coupe référencé X-X sur la figure 1,

- la figure 11 représente une vue générale schématique en coupe longitudinale des moyens de brossage proprement dits, selon des plans de coupe non coplanaires référencés XI sur la figure 16,

- la figure 12 représente selon une vue identique l'équipage entraîné à rotation autour de l'axe principal et muni de la brosse,

- la figure 13 représente selon une vue identique les moyens auxiliaires entraînant l'équipage selon un mouvement hélicoïdal,

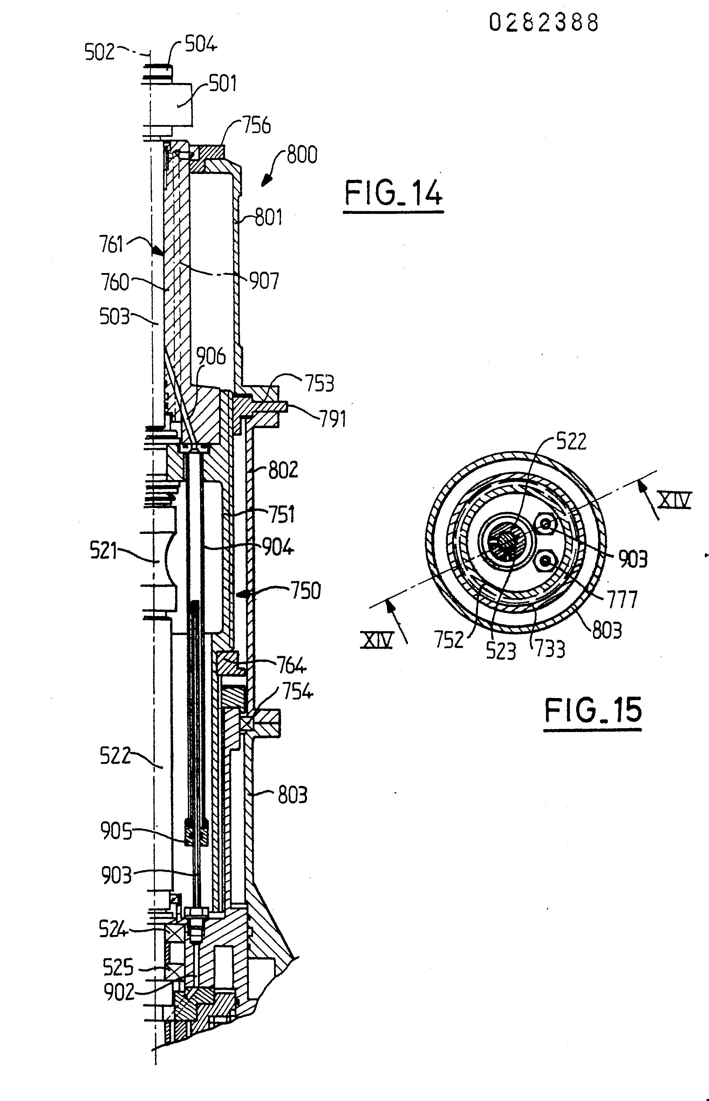

- la figure 14 représente selon une autre vue en coupe longitudinale référencée XIV-XIV sur la figure 15, les moyens de brossage,

- la figure 15 représente une vue des moyens de brossage selon un plan de coupe transversal référencé XV-XV sur la figure 11,

- la figure 16 représente une vue axiale des moyens de brossage illustrés schématiquement sous la flèche référencée XVI sur la figure 11,

- la figure 17 représente une vue des moyens de brossage selon un plan de coupe transversal référencé XVII sur la figure 11,

- la figure 18 représente une vue extérieure du carter logeant les moyens de brossage,

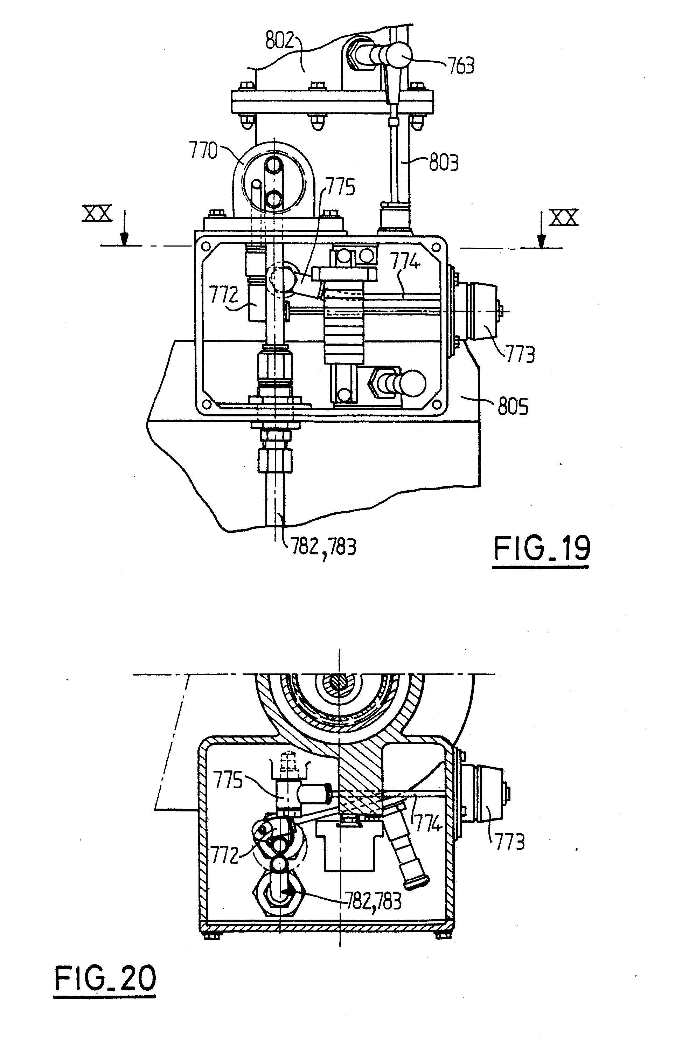

- la figure 19 représente une autre vue de ce carter tel qu'illustrée par la flèche référencée XIX sur la figure 18,

- la figure 20 représente une vue en coupe du carter illustrée sous la référence XX-XX sur la figure 19, et

- la figure 21 illustre la cinématique de déplacement des griffes portées par le châssis fixe.

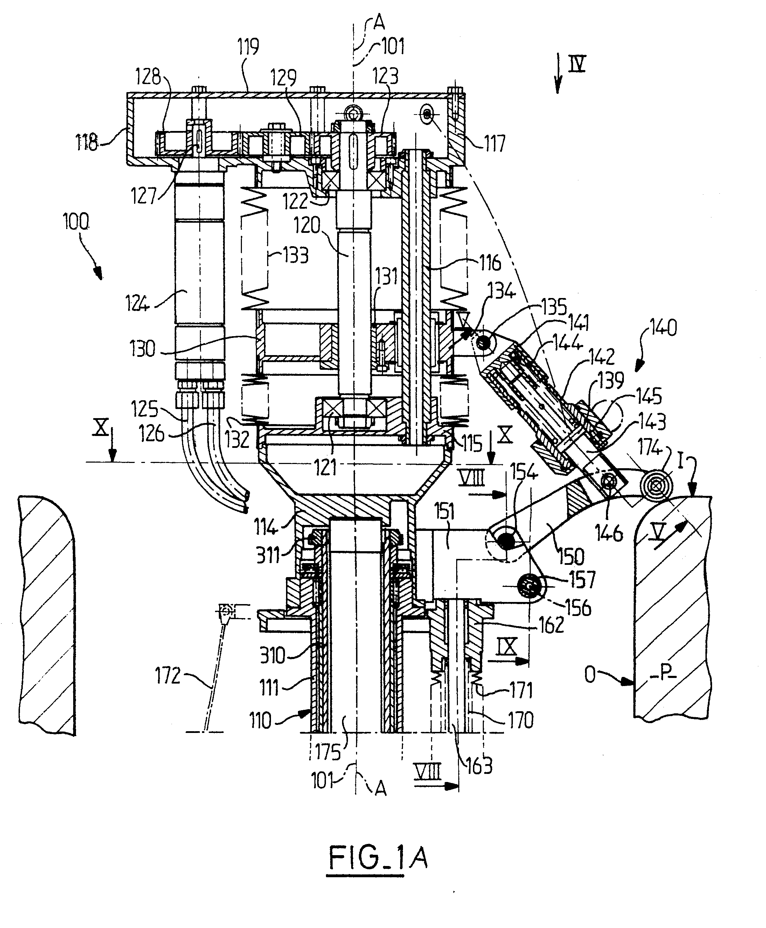

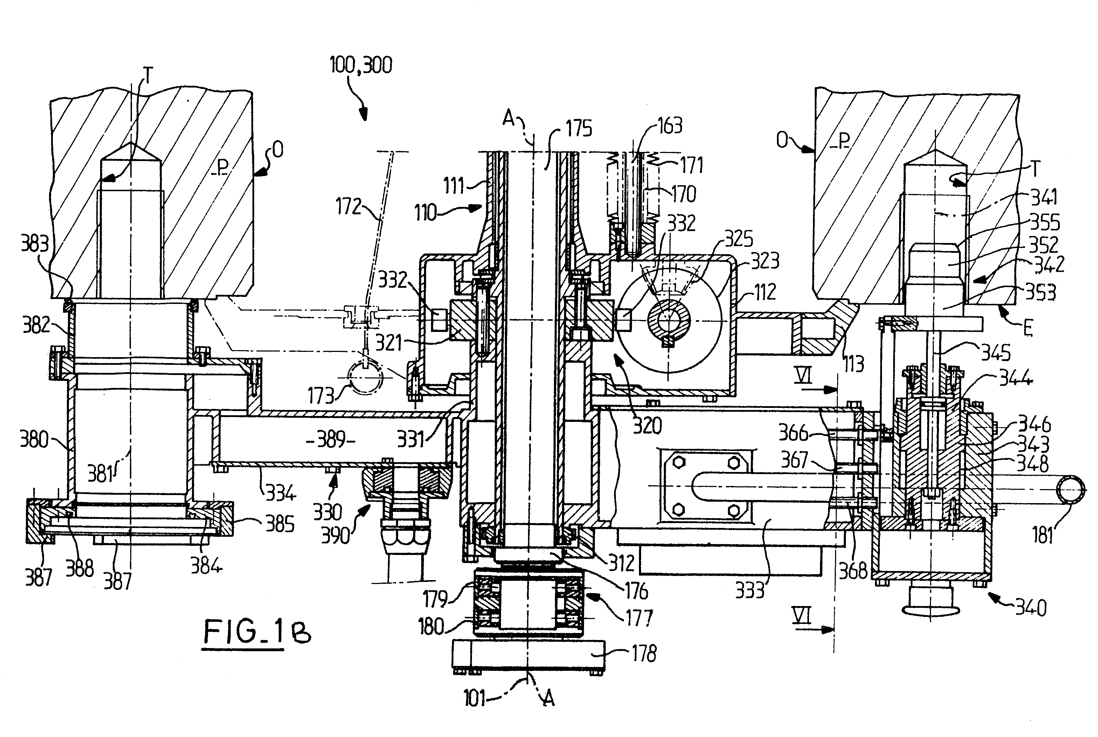

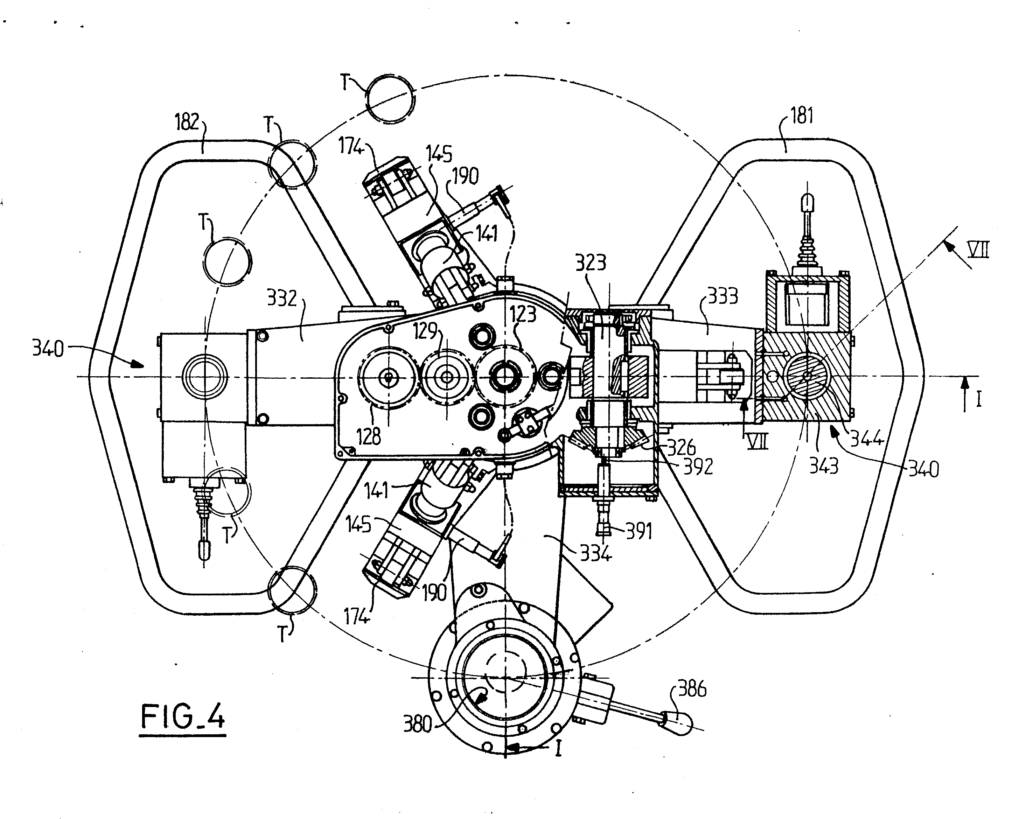

On aperçoit sur les figures 1 et 4 annexées la paroi P d'une cuve munie d'un orifice cylindrique O, tel qu'un trou d'homme. L'axe de l'orifice O est référencé A-A. Les deux surfaces opposées de la paroi P, qui s'étend transversalement à l'axe A-A sont référencées E et I respectivement. La surface E constitue la surface extérieure de la cuve. La surface I constitue la surface intérieure de la cuve.

La paroi P est par ailleurs munie d'une pluralité d'alésages taraudés T. Ces alésages taraudés T sont destinés à recevoir des goujons ou moyens équivalents assurant la fixation d'une trappe de visite étanche en regard de l'orifice O. Les alésages taraudés T débouchent sur la surface extérieure E, leur axe est parallèle à l'axe A-A de l'orifice O. Les alésages taraudés T sont équi-répartis autour de l'axe A-A. Ils sont au nombre de 16 selon la représentation illustrée sur la figure 4, cette représentation n'étant cependant aucunement limitative.

Comme indiqué précédemment l'invention a pour but de proposer des moyens permettant de brosser successivement chacun des alésages taraudés T.

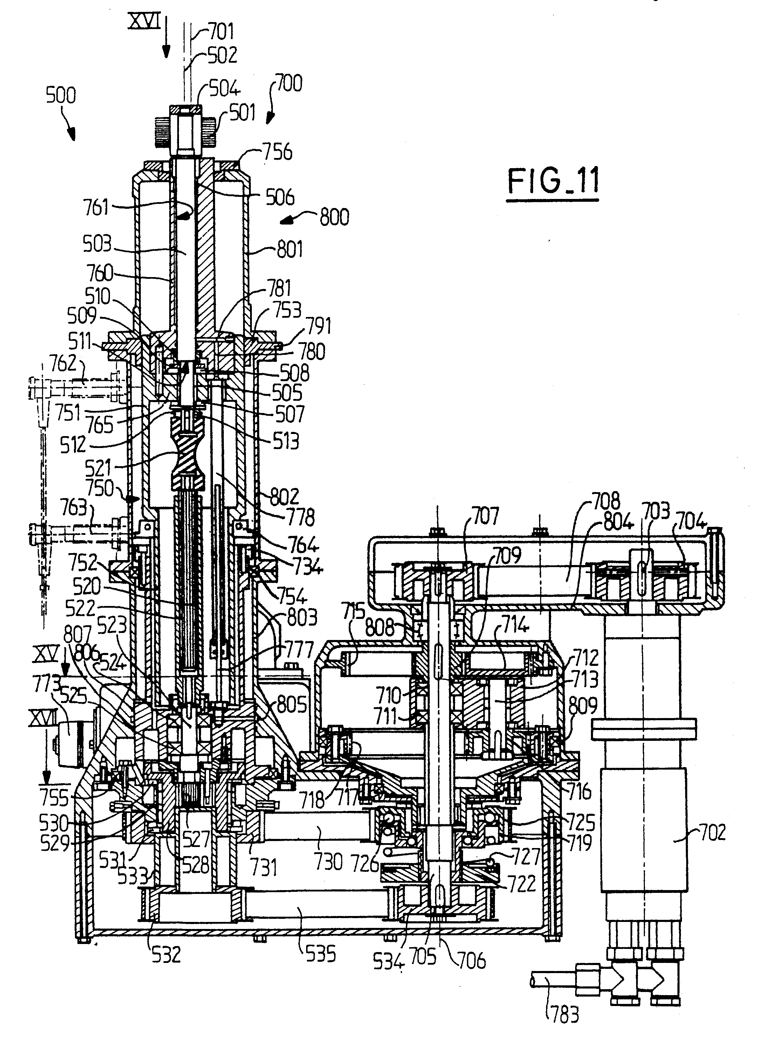

Pour cela, l'invention propose des moyens de brossage illustrés sur les figures 11 et suivantes associés à des moyens support représentés sur les figures 1 à 10.

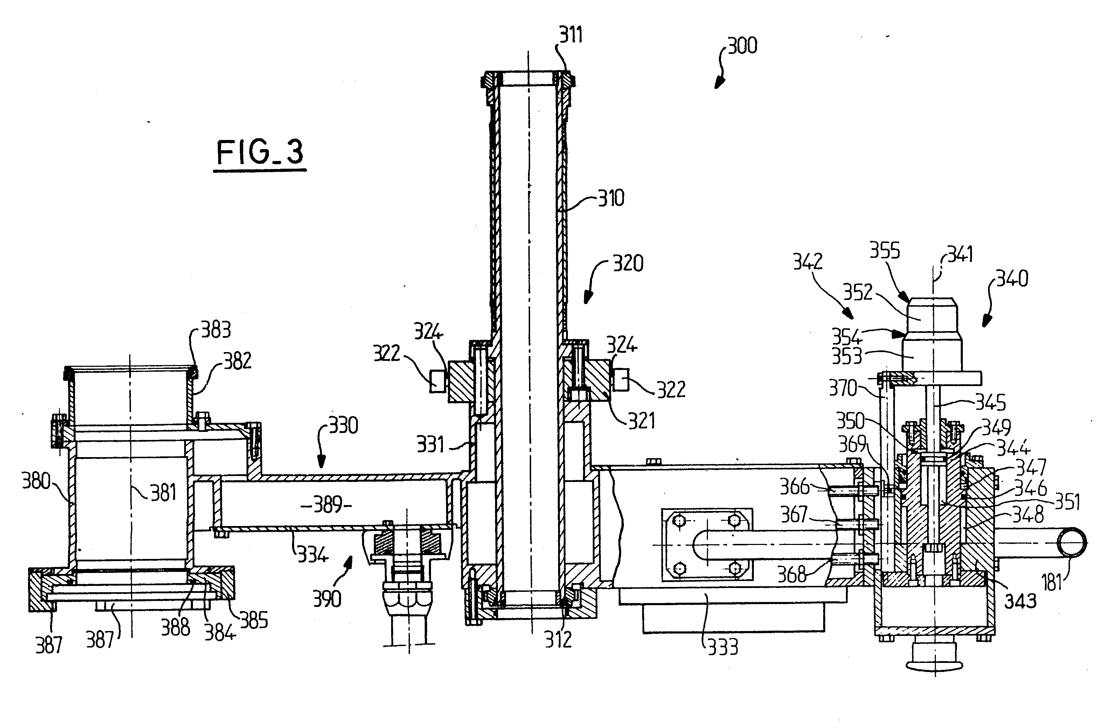

Comme indiqué précédemment, les moyens support comprennent pour l'essentiel un châssis fixe 100 destiné à être fixé dans l'orifice O contre la paroi P d'une part, et un châssis mobile 300 illustré sur la figure 3, porté à rotation par le châssis fixe 100 autour de l'axe A-A et portant lui-même les moyens de brossage illustrés sur les figures 11 et suivantes. Le châssis fixe 100, présenté en regard de la surface extérieure E est engagé dans l'orifice O. Dans la suite de la description les termes "avant" et "arrière" seront utilisés en référence à la direction de déplacement lors de l'introduction du châssis fixe 100 dans l'orifice O.

CHASSIS FIXE 100

Le châssis fixe 100 possède un axe longitudinal de symétrie référencé 101. A l'utilisation, cet axe 101 coïncide avec l'axe A-A de l'orifice O.

Le châssis fixe 100 comprend une embase 110. Celle-ci se compose essentiellement d'un canon 111 centré sur l'axe 101 et d'un carter 112. Le carter 112 porte des moyens 113 formant mors de centrage. Ces moyens 113 s'étendent radialement par rapport à l'axe 101. Ils sont destinés à venir en appui contre la surface extérieure E. Les moyens 113 formant mors de centrage peuvent être composés d'une couronne continue, centrée sur l'axe 101, ou encore être formés d'une pluralité de pattes équi-réparties autour de l'axe 101 et s'étendant radialement par rapport à celui-ci.

A l'opposé du carter 112, vers l'avant, le canon 111 porte une entretoise 114 centrée sur l'axe 101 qui porte elle-même sur l'avant un flasque 115. Le flasque 115 s'étend transversalement à l'axe 101. Il porte, à l'opposé de l'embase 110, trois colonnes 116. Les colonnes 116 s'étendent parallèlement à l'axe 101 et sont équi-réparties autour de celui-ci. Les colonnes 116 supportent à leur seconde extrémité avant un second flasque 117 délimitant un carter 118. Le carter 118 est obturé par un couvercle 119.

Les flasques 115, 117 supportent libres de rotation autour de l'axe 101 une vis 120. La vis 120 est guidée à rotation dans des paliers 121, 122 portés respectivement par les flasques 115 et 117.

La vis 120 émerge à l'intérieur du carter 118. Elle porte au niveau de son extrémité interne au carter 118 un pignon mené 123.

Le carter 118 porte un moteur pneumatique 124. Le moteur 124 est alimenté par des conduits 125, 126. L'arbre de sortie 127 du moteur 124 s'étend parallèlement à l'axe 101. Il s'étend à l'intérieur du carter 118 et porte un pignon menant 128.

Le carter 118 supporte en outre libre de rotation autour d'un axe parallèle à l'axe 101 un pignon intermédiaire 129. Le pignon intermédiaire 129 engrène à la fois avec le pignon menant 128 et le pignon mené 123, pour entraîner la vis 120 à rotation autour de l'axe 101 lorsque le moteur pneumatique 124 est actionné.

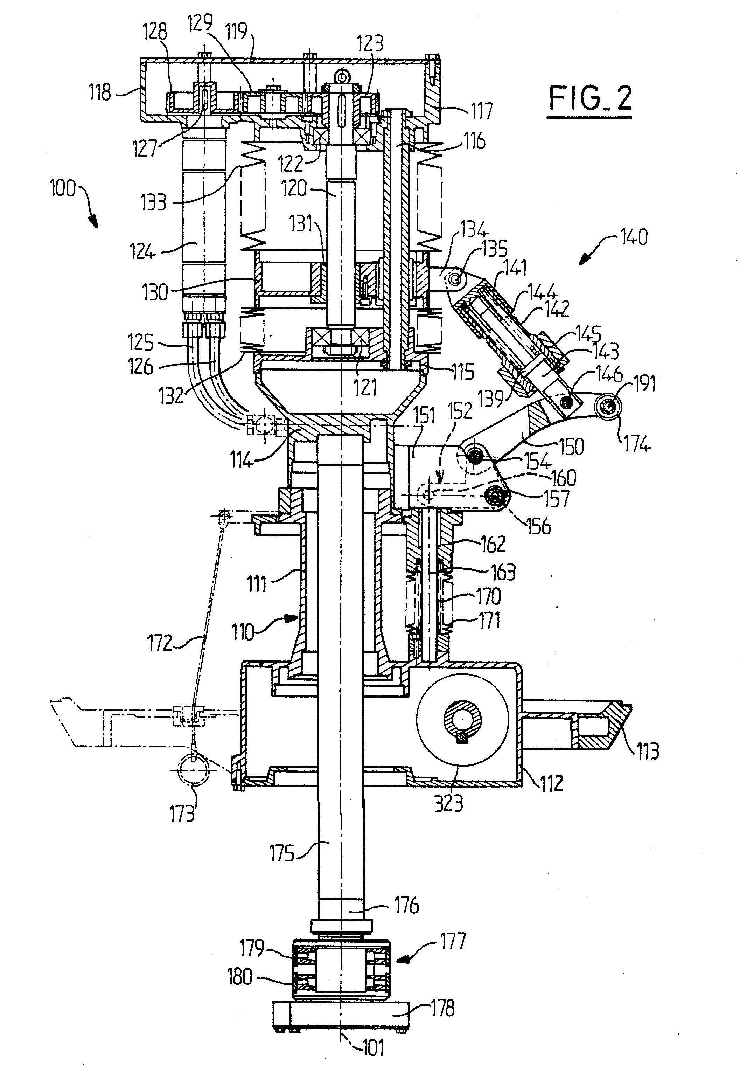

On aperçoit également à l'examen de la figure 2 une plaque mobile 130. Cette plaque s'étend perpendiculairement à l'axe 101. Elle est guidée à translation parallèlement à l'axe 101 sur les colonnes 116.

La plaque mobile 130 est munie au niveau d'un alésage central d'un écrou 131 en prise avec la vis 120.

Afin de protéger la vis 120 et l'écrou 131 coopérant,la plaque mobile 130 est reliée respectivement avec les flasques 115 et 117 par l'intermédiaire de soufflets 132, 133.

L'homme de l'art comprendra aisément que la mise en service du moteur pneumatique 124, alternativement dans un sens et dans l'autre permet d'assurer le déplacement à translation parallèlement à l'axe 101 en va-et-vient, de la plaque mobile 130.

La plaque mobile 130 est munie sur sa surface extérieure d'une pluralité de chapes 134 équi-réparties autour de l'axe 101.

Ces chapes 134 supportent à pivotement des biellettes élastiques 140,par l'intermédiaire de tourillons 135. L'axe des tourillons 135 s'étend perpendiculairement à des rayons dressés à partir de l'axe 101.

Les biellettes élastiques 140 sont par ailleurs articulées sur des griffes 150 par l'intermédiaire de tourillons 146. Au niveau de chaque bielle élastique 140, l'axe du tourillon 146 est parallèle à l'axe du tourillon 135.

Plus précisément, chaque bielle élastique 140 comprend un manchon à filetage interne 141, une cage de ressort 142, un poussoir 143, un ressort 144 et un support de détecteur 145.

Chaque manchon 141 est porté à pivotement par un tourillon 135 sur une chape 134. Il reçoit une cage de ressort 142 généralement cylindrique qui lui est concentrique. La cage de ressort 142 est ouverte à l'opposé du manchon 141. Cependant, la section d'ouverture de la cage de ressort 142 est inférieure à la section interne de la chambre délimitée par cette cage.

Par ailleurs, chaque poussoir 143 est articulé par l'intermédiaire d'un tourillon 146 sur une griffe 150. Pour l'essentiel, le poussoir 143 est formé d'une tige coaxiale au manchon 141 et à la cage du ressort 142. Le poussoir 143 s'étend principalement à l'intérieur de la cage de ressort 142, mais néanmoins émerge à l'extérieur de la cage au niveau de l'ouverture ménagée dans celle-ci. Chaque poussoir 143 est pourvu, à l'intérieur de la cage de ressort 142, d'une nervure annulaire 139. La section de la nervure 139 est supérieure à la section d'ouverture de la cage de ressort 142. Ainsi, la nervure 139 interdit l'extraction complète du poussoir 143 à l'extérieur de la cage de ressort 142. Le ressort 144 est intercalé entre la base du manchon 141 articulé sur la chape 134 et la nervure 139 du poussoir 143. Le ressort 144 sollicite donc le poussoir 143 vers l'extérieur de la cage de ressort 142 tout en autorisant, lors de sa compression, le déplacement du poussoir 143 vers l'intérieur de la cage 142.

Le support 145 fixé sur la périphérie extérieure de la cage 142 porte un détecteur 190 coopérant avec un pion placé sur la nervure 139 ou à proximité pour contrôler les déplacements du poussoir 143 par rapport à la cage de ressort 142.

L'entretoise 114 intercalée entre le canon 111 et le flasque 115 porte une pluralité de toiles 151 en nombre égal au nombre de bielles élastiques 140 et de griffes 150. Les toiles 151 s'étendent radialement par rapport à l'axe 101. Chaque griffe 150 est articulée sur une paire de leviers 152, 153 par l'intermédiaire d'un tourillon 154. L'axe 155 du tourillon est parallèle à l'axe des tourillons 134 et 146 associés.

Les leviers 152, 153 sont formés de plaques planes dont le contour a la forme générale d'un "L". Chaque paire de leviers 152, 153 est articulée sur l'une des toiles 151 associés autour d'un axe 156 matérialisé par des tourillons 157. L'axe 156 s'étend parallèlement à l'axe des tourillons 154, 146 et 134.

En position normale d'utilisation, l'axe 155 est situé radialement à l'intérieur de l'axe 156 par rapport à l'axe A-A de l'orifice.

En position normale d'utilisation, la petite branche du "L" des leviers 152, 153 s'étend parallèlement à l'axe 101, vers l'avant. La grande branche du "L" des leviers 152, 153 s'étend sensiblement radialement par rapport à l'axe 101, en rapprochement de celui-ci.

Le tourillon 154 délimitant l'articulation entre la griffe 150 et les leviers 152, 153 est prévu en extrémité de la petite branche du "L" des leviers 152, 153. Les tourillons 157 délimitant l'articulation des leviers 152, 153 sur la toile 151,sont prévus au niveau de la zone de liaison entre les deux branches du "L" des leviers 152, 153.

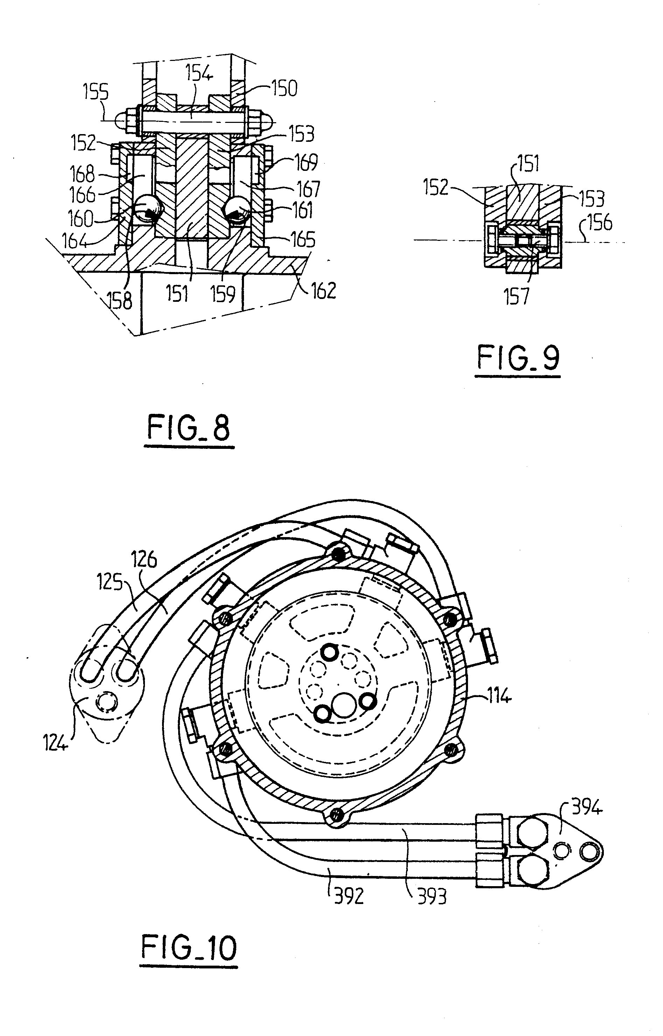

Par ailleurs, comme cela apparaît à l'examen comparé des figures 2 et 8 notamment, il est prévu au niveau de l'extrémité de la grande branche des leviers en "L" 152, 153, et sur la surface extérieure de ceux-ci, des logements tronconiques 158, 159. Ces logements reçoivent des billes 160, 161. On notera par ailleurs à l'examen des figures 1 et 2 la présence d'un plateau 162. Le plateau 162 en forme générale de couronne s'étend transversalement à l'axe 101 sur l'arrière des toiles 151. Il est guidé parallèlement à l'axe 101 par des colonnes 163. Les colonnes 163 s'étendent parallèlement à l'axe 101 et sont équi-réparties autour de celui-ci. Les colonnes 163, relient le carter 112 aux toiles 151.

Comme illustré sur la figure 8 le plateau 162 porte des paires de flasques 164, 165 en nombre égal au nombre de biellettes élastiques 140 et de griffes 150. Les flasques 164, 165 sont parallèles entre eux et parallèles aux leviers 152, 153 et toile 151 associés. Ils définissent en coopération avec le plateau 162 des logements oblongs 166, 167 recevant les billes 160, 161. Les logements oblongs 166, 167 s'étendent parallèlement à l'axe 101.

La profondeur des logements 166, 167 considérée parallèlement à l'axe des tourillons 154 et 157 est telle qu'en position normale d'utilisation, les billes 160, 161 qui reposent contre le fond des logements 166, 167 à l'extrémité arrière de ceux-ci , sont maintenues dans les logements tronconiques 158, 159 des leviers 152, 153.

Par ailleurs, les flasques 164, 165 sont munis de cavités 168, 169 qui débouchent dans le fond des logements 166, 167 au niveau de l'extrémité avant de ceux-ci la plus éloignée du plateau 162.

Lorsque les cavités 168, 169 sont placées en regard des billes 160, 161, celles-ci peuvent échapper aux logements 158, 159 pour autoriser un libre pivotement des leviers 152, 153 autour de l'axe 156.

Le plateau 162 est repoussé en appui contre les toiles 151 par des ressorts 170. Les ressorts sont engagés sur les colonnes 163 entre le carter 112 et le plateau 162. Les ressorts 170 sont protégés par des soufflets 171.

Un câble 172 est fixé sur le plateau 162. Comme illustré sur les figures 1 et 2, le câble 172 s'étend sensiblement parallèlement à l'axe 101, vers l'arrière à l'opposé du carter 118. Il traverse le carter 112 et possède à son extrémité un anneau de manutention 173.

L'ensemble comprenant les leviers 152, 153, les billes 160, 161, le plateau 162 constitue un dispositif de retrait d'urgence des griffes 150. Le fonctionnement de ce dispositif sera décrit plus en détail par la suite.

Les griffes ont une forme arquée, concave en direction des mors de centrage 113, c'est-à-dire vers l'arrière.

Les griffes 150 sont munies en extrémité d'un galet 174 apte à reposer contre la surface intérieure I de la paroi P. Chaque tourillon 146 déterminant l'articulation entre une bielle élastique 140 et une griffe 150 est placé entre le tourillon 154 et le galet 174 associés.

Le canon 111 est traversé par un fût 175 cylindrique centré sur l'axe 101. Le fût 175 sert de collecteur. Il est traversé par les diverses liaisons électriques associées aux détecteurs du dispositif et par les conduits pneumatiques 125, 126. Le fût 175 émerge à l'arrière du carter 112, du coté de la surface extérieure E de la paroi P. A ce niveau le collecteur 175 supporte à son extrémité 176, d'une part, un système de témoins lumineux 177, d'autre part, une plaque 178 de raccordement électromagnétique.

Le système de témoins lumineux 177 est formé d'une structure généralement cylindrique centrée sur l'axe 101. Le système de témoins 177 porte deux témoins 179, 180 en forme de couronne annulaire centrée sur l'axe 101. Ces témoins 179, 180 sont respectivement de couleurs verte et rouge. Le témoin vert 179 est mis en service lorsque les détecteurs 190 associés aux bielles élastiques 140 détectent que l'ensemble des griffes 150 sont déplacées en position de travail en extension, dans laquelle les galets 174 reposent contre la surface interne I de la paroi P. En d'autres termes, le témoin vert 179 visualise l'immobilisation du support 100 sur l'orifice O de la cuve. Par contre, le témoin annulaire rouge 180 est mis en service tant que les détecteurs 190 ne détectent pas le déplacement de l'ensemble des griffes 150 en position de travail en extension.

De par la forme annulaire des témoins, un opérateur peut aisément contrôler l'état des moyens support 100.

Les détecteurs 190 supportés par les éléments référencés 145 peuvent être réliés électriquement à une carte de traitement logée dans le carter 118, cette carte étant elle-même reliée aux témoins 179, 180 par l'intermédiaire de liaisons traversant le collecteur 175.

On aperçoit également sur la figure 4 une paire de poignées 181, 182 solidaires du carter 112 et destinées à faciliter la manutention du dispositif.

Pour l'essentiel le fonctionnement du châssis fixe 100 est le suivant.

Dans un premier temps, la plaque mobile 130 étant adjacente au flasque 117, les griffes 150 sont placées en position de repos escamotée. Elles s'étendent sensiblement parallèlement à l'axe 101 vers l'avant. Dans cette position, les galets 174 sont circonscrits à l'intérieur d'une enveloppe de section inférieure à la section droite de l'orifice O. Le châssis fixe 100 peut donc être engagé dans l'orifice 0 . Cet engagement est opéré jusqu'à ce que la structure formant mors de centrage 113 vienne en appui contre la surface extérieure E de la paroi P. Lors de cet engagement dans l'orifice O, le châssis est orienté, par rapport à l'axe de l'orifice 0, par des vérins 340 qui seront décrits par la suite. Ensuite, l'opérateur doit mettre en service le moteur pneumatique 124 pour entraîner la vis 120 et déplacer le plateau mobile 130 en rapprocheement du flasque 115. En synchronisme les bielles élastiques 140 induisent le pivotement des griffes 150 autour des tourillons 154, vers la position en extension illustrée sur la figure 1. Dans cette position les galets 174 reposent contre la surface interne I de la paroi P. Le châssis fixe 100 est ainsi immobilisé sur l'orifice O et automatiquement centré sur l'axe A-A.

La présence des ressorts 144 dans les bielles élastiques 140 évite toute détérioration du châssis fixe 100 ou de la paroi P.

Pour retirer normalement le châssis fixe 100, il suffit de commander le moteur pneumatique 124 en sens inverse pour déplacer à nouveau le plateau mobile 130 en rapprochement du flasque 117. De là, les griffes 150 sont reportées en position de repos escamotée par pivotement autour des tourillons 154, par l'intermédiaire des bielles élastiques 140.

Par ailleurs, et cela est une caractéristique importante de la présente invention, le châssis fixe 100 est équipé de moyens permettant de reporter rapidement les griffes 150 en position de repos escamotée même en cas de déficience complète des moyens destinés à entraîner le plateau mobile 130 et les bielles élastiques 140, notamment en cas de panne des moyens d'alimentation pneumatique. Ces moyens de retrait d'urgence sont constitués par les leviers 152, 153, les billes 160, 161 et le plateau 62.

On va maintenant décrire le fonctionnement de ces moyens conçus pour permettre un retrait d'urgence du châssis fixe 100.

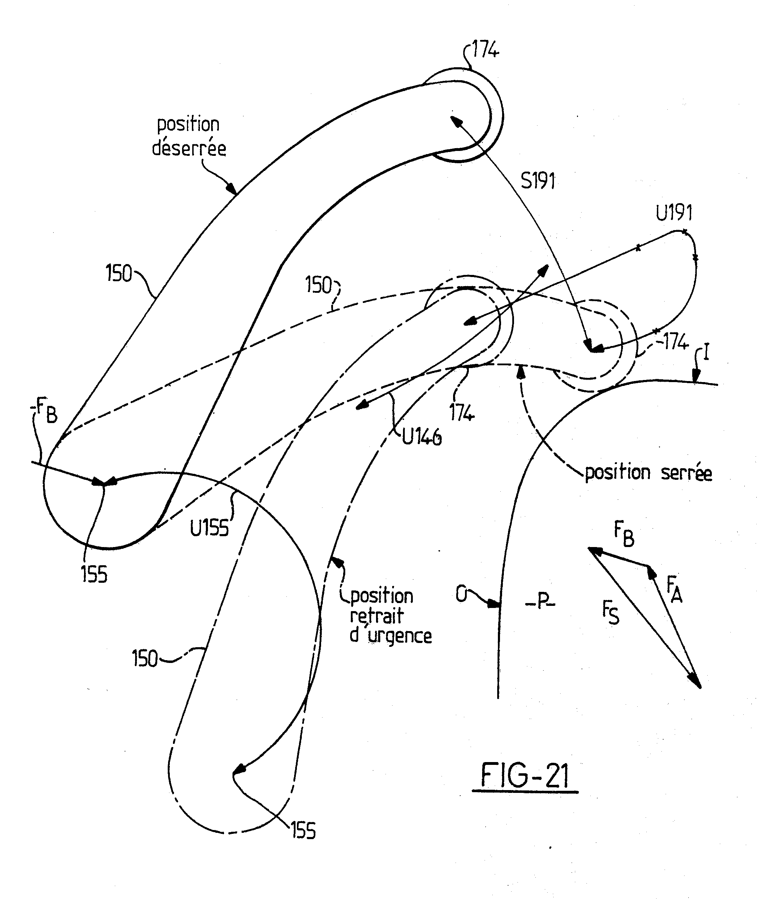

Le ressort 144 intégré à chaque bielle 140 exerce sur le tourillon 146 un effort de serrage $F_S$ (voir figure 21) dont la direction coïncide avec une génératrice passant par l'axe des tourillons 135 , 146. Par ailleurs, le galet 174 reçoit une réaction $F_A$ dont la direction qui coïncide avec un rayon du galet 174 passe par le point de contact du galet sur la paroi intérieure I de la paroi. De plus, chaque griffe 150 exerce sur le tourillon 154 un effort $F_B$. La somme vectorielle des efforts $F_B$ et $F_A$ équilibre la force de serrage $F_S$.

Les leviers 152, 153 qui supportent le tourillon 154 exercent donc sur le tourillon 154 une réaction -F$_B$. Cette force tend à faire pivoter les leviers 152, 153 autour de l'axe 156 du tourillon 157.

En d'autres termes, la force - F$_B$ tend à éloigner l'axe 155 du tourillon 154 de l'axe de symétrie 101, c'est-à-dire tend à faire pivoter les leviers 152, 153 illustrés sur la figure 2 dans le sens des aiguilles d'une montre autour de l'axe 156.

Cependant, en position normale d'utilisation les ressorts 170 poussent le plateau 162 muni des flasques 164, 165 en appui contre les toiles 151. Les billes 160, 161 sont donc placées à l'extrémité arrière des logements oblongs 166, 167 opposée aux cavités 168, 169. Comme indiqué précédemment, les logements oblongs 166, 167 s'étendent pour l'essentiel parallèlement à l'axe de symétrie 101. Les billes 160, 161 interdisent par conséquent le pivotement des leviers 152, 153 autour de l'axe 156. De fait, un tel pivotement des leviers 152, 153 exigerait que les billes 160, 161 puissent se déplacer dans un logement annulaire centré sur l'axe 156.

Par contre, lorsqu'un opérateur exerce une traction sur l'anneau 173 raccordé au câble 172, le plateau 162 est tiré vers l'arrière à l'encontre de la sollicitation exercée par les ressorts 170, en éloignement des toiles 151.

Ainsi, les cavités 168, 169 sont portées en regard des billes 160, 161. Celles-ci peuvent alors sortir des logements tronconiques 158, 159 ménagés dans les leviers 152, 153 et pénétrer dans les cavités 168, 169. Dans cette position aucun élément n'est interposé entre les logements tronconiques 158, 159 ménagés dans les leviers 152, 153 et les logements oblongs 166, 167 ménagés dans le plateau 162. Les leviers 152, 153 sont alors libres de pivoter autour de l'axe 156 sous l'effet de la force - F$_B$ précitée.

Au cours de ce mouvement, les bielles élastiques 140 pivotent autour du tourillon 135. Les griffes 150 sont articulées d'une part, sur les bielles élastiques 140 autour du tourillon 146, d'autre part, sur les leviers 152, 153 autour du tourillon 154. Ainsi, les griffes 150 décrivent un mouvement de pivotement complexe tel qu'elles sont déplacées dans une position sensiblement parallèle à l'axe de symétrie 101. Elles sont alors circonscrites dans une enveloppe de section inférieure à la section droite de l'orifice O.

Le fonctionnement du retrait d'urgence rapide qui vient d'être décrit, initié par traction sur le câble 172 est illustré sur la figure 21 annexée.

Sur cette figure on a représenté en traits pleins la position d'une griffe 150 en position déserrée, lorsque le plateau mobile 130 est adjacent au flasque 117. On a représenté en traits interrompus une griffe 150 en position serrée, lorsque le plateau mobile 130 est déplacé en rapprochement du flasque 115 par un moteur pneumatique 124. Enfin, on a représenté sur la figure 21, en traits mixtes interrompus, une griffe 150 en position de retrait d'urgence, après traction sur le câble 172. De plus, sur la figure 21, on a représenté sous la référence S 191 la trajectoire de l'axe du galet 174 lors du processus de serrage des griffes. Cette trajectoire S 191 est bien entendu centrée sur l'axe 155 du tourillon 154. On a représenté sous la référence U 155 la trajectoire de l'axe 155 du tourillon 154 lors du retrait d'urgence obtenu par traction sur le câble 172. Cette trajectoire U 155 est bien entendu centré sur l'axe 156. On a illustré sous la référence U 146 la trajectoire de l'axe du tourillon 146 lors de la procédure de retrait d'urgence. Cette trajectoire U 146 est centrée sur l'axe du tourillon 135. Enfin, on a illustré sous la référence U 191 la trajectoire de l'axe du galet 174 au cours de la procédure de retrait d'urgence.

Le cas échéant, un ressort additionnel peut être inséré entre la toilé 151 et les leviers 152, 153 pour faciliter le pivotement des leviers, et donc des griffes 150 autour de l'axe 156 lors de la procédure de retrait d'urgence initiée par traction sur le câble 172.

CHASSIS MOBILE 300

Le châssis mobile 300 illustré schématiquement sur la figure 3 est porté par le châssis fixe 100 à pivotement autour de l'axe de symétrie 101. Il a pour fonction essentielle de déplacer les moyens de brossage illustrés sur la figure 11 et suivantes, successivement en regard de chacun des alésages taraudés T à brosser.

Le châssis mobile 300 comprend un manchon 310 coaxial à l'axe 101. Le manchon 310 est engagé entre entre l'embase 110 et le collecteur 175.

Le châssis mobile 300 est entraîné par pas, autour de l'axe 101, grâce à un indexeur à came portant la référence générale 320. Cet indexeur comprend principalement une couronne 321 portant une pluralité de galets 322, et une came 323.

La couronne 321 est fixée sur le manchon 310, sensiblement à mi-longueur de celui-ci.

La couronne 321 est pourvue d'une pluralité de tourillons 324 équi-répartis autour de l'axe 101 et s'étendant radialement par rapport à celui-ci. Chacun des tourillons 324 porte un galet 322. Les galets 322 engrènent avec la came 323.

L'axe de celle-ci s'étend perpendiculairement à un rayon dressé à partir de l'axe de symétrie 101.

La came 323 possède une surface active, transversale à son axe, sur laquelle roulent successivement les galets 322. Cette surface active est formée d'une surface helicoïdale de pas variable couvrant 270° et d'une surface plane, normale à l'axe de la came 323 qui couvre 90°.

L'arbre de la came 323 est solidaire d'un pignon conique 326. Le pignon conique 326 engrène avec un pignon moteur conique 325. Le pignon moteur 325 est relié à l'arbre de sortie d'un moteur pneumatique 394.

L'homme de l'art comprendra aisément que l'actionnement en séquence de ce moteur pneumatique 394 permet d'entraîner le châssis mobile 300, par pas, à rotation autour de l'axe de symétrie 101.

Les pas de déplacement du châssis mobile 300 sont délimités par l'arrivée des galets 322 sur le secteur plan de la came 323. La présence de ce secteur plan permet donc d'obtenir un indexage précis du châssis mobile 300 sans requérir de contrôler avec précision l'instant d'arrêt du moteur pneumatique 394.

On notera que la couronne 321, les tourillons 324 et les galets 322, la came 323 et les pignons 325, 326 sont logés dans le carter 112.

Le châssis mobile 300 comprend en outre un bras mobile 330. Le bras mobile 330 est solidaire du manchon 310. Le bras 330 comprend un canon 331 central engagé sur le manchon 310 et trois branches 332, 333 et 334.

Les branches 332, 333 et 334 s'étendent pour l'essentiel radialement par rapport à l'axe 101. Les branches 332, 333 sont sensiblement diamétralement opposées par rapport à l'axe 101. La branche 334 est sensiblement orthogonale aux branches 332, 333.

La branche 334 est destinée à supporter les moyens de brossage illustrés sur la figure 11 et suivantes.

Les branches 332, 333 sont munies de vérins auto-centreurs destinés à assurer un positionnement précis du châssis mobile 300 portant les moyens de brossage par rapport aux alésages taraudés T.

Il est donc prévu deux vérins auto-centreurs diamétralement opposés par rapport à l'axe 101.

La structure d'un tel vérin auto-centreur 340 est illustré sur la droite de la figure 3.

Chaque vérin auto-centreur 340 possède un axe de symétrie 341 s'étendant parallèlement à l'axe 101.

Chaque vérin auto-centreur 340 est en fait formé de deux vérins montés en cascade afin de pouvoir déplacer une tête de centrage 342 dans trois positions successives.

Pour celà, chaque vérin 340 comprend pour l'essentiel trois éléments 343, 344 et 345, coaxiaux à l'axe 341 et engagés l'un dans l'autre.

L'élement 343 qui constitue le corps extérieur de vérin est fixé en extrémité de l'une des branches 332 ou 333. Le corps de vérin 343 définit une chambre interne cylindrique centrée sur l'axe 341. Cette chambre reçoit à translation, selon l'axe 341, l'élément 344. Ce dernier forme par conséquent un piston primaire. Pour cela, l'élément 344 est muni sur sa périphérie d'une nervure qui reçoit un joint torique d'étanchéité 345. Le joint 345 repose contre la périphérie interne du corps de vérin 343. Il est ainsi ménagé entre la périphérie extérieure du piston primaire 344 et la surface interne du corps de vérin 343, respectivement de part et d'autre de la garniture d'étanchéité 346, deux chambres de travail 347, 348. La mise sous pression des chambres 347, 348 permet de déplacer le piston primaire 344 alternativement dans un sens et dans l'autre selon l'axe 341.

Le piston primaire 344 constitue par ailleurs le corps d'un vérin secondaire. Pour cela, il délimite une chambre interne généralement cylindrique qui reçoit à translation selon l'axe 341 l'élément 345. L'élément 345 forme donc piston secondaire. Il est muni sur sa périphérie d'une nervure qui reçoit un joint torique d'étanchéité 349. Le joint 349 repose contre la surface interne du corps 344. Il est ainsi formé entre la périphérie extérieure du piston secondaire 345 et la surface interne du corps 344, respectivement de part et d'autre de la garniture d'étanchéité 349, deux chambres de travail 350, 351. La mise sous pression successive des chambres 350, 351 permet de déplacer le piston 345 alternativement dans un sens ou dans l'autre selon l'axe 341.

La tête de centrage 342 est fixée sur l'extrémité avant du piston secondaire 345 émergeant du vérin 340. La tête 342, de révolution autour de l'axe 341, est étagée. Elle comprend essentiellement deux portions 352, 353 de diamètre différent.

La portion 353, de plus grand diamètre, est adjacente au piston secondaire 345. Elle se raccorde à la portion 352 avant de plus faible diamètre par un chanfrein 354. Le chanfrein 354 converge vers l'axe 341 en éloignement du piston secondaire 345. Enfin, la portion 352 est munie sur son extrémité libre d'un chanfrein 355. Le chanfrein 355 converge vers l'axe 341 en éloignement du piston secondaire 345.

Les chanfreins 355 et 354 ont pour but de faciliter l'insertion de la tête de centrage 342 dans un alésage taraudé T.

Comme cela apparaît à l'examen de la figure 1, la portion arrière 353 de plus fort diamètre de la tête de centrage 342 possède une section droite sensiblement complémentaire de la section libre définie par le sommet des filets des alésages taraudés T.

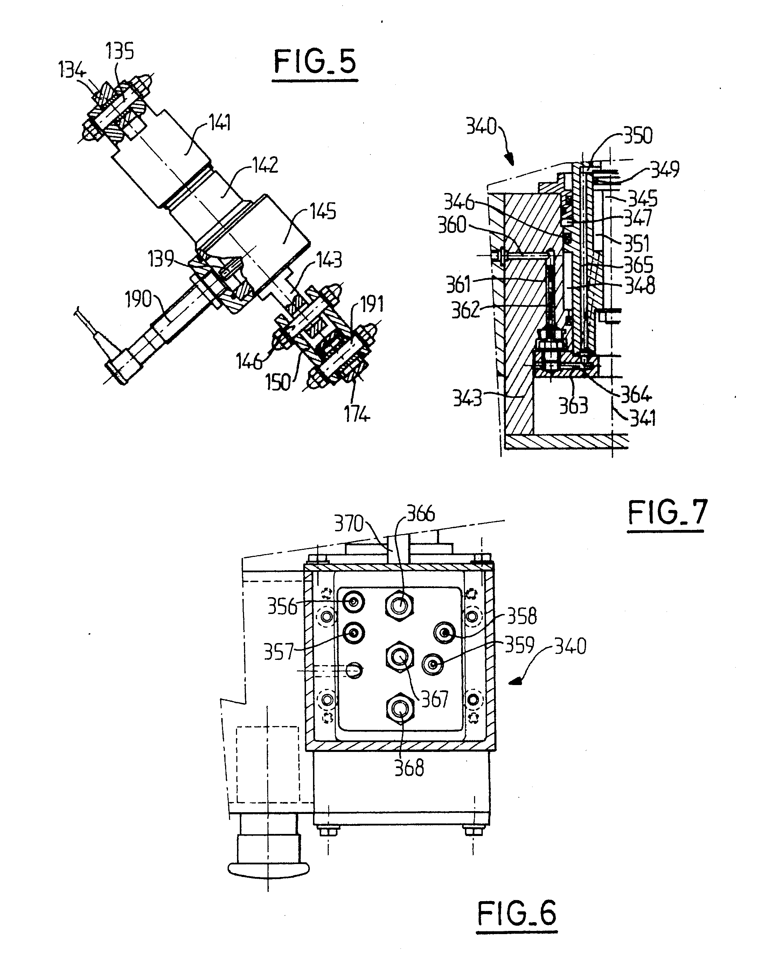

Les chambres de travail 347, 348, 350 et 351 sont alimentées en air sous pression à l'aide de conduits portés par les bras 332, 333. Ces conduits sont raccordés à des tubulures 356, 357, 358 et 359 fixées sur les corps de vérins 343 (voir figure 6). Les tubulures 356 à 359 se prolongent par des conduites ménagées dans le corps de vérin 343. Deux de ces conduites débouchent radialement directement dans les chambres de travail 347, 348 pour assurer l'entraînement du vérin primaire composé par le corps de vérin 343 et du piston primaire 344.

Par contre, les deux autres conduites ménagées dans le corps de vérin 343 comprennent (voir figure 7) une première section borgne 360 généralement radiale par rapport à l'axe 341 qui débouche dans une deuxième section 361 longitudinale, borgne et ouverte sur l'arrière du corps de vérin 343, c'est-à-dire à l'opposé de la tête de centrage 342. Cette seconde section 361 reçoit, avec étanchéité, un tube coulissant 362 porté par une couronne 363 solidaire de l'extrémité arrière du piston primaire 344. Le tube 362 communique avec un conduit transversal 364 ménagé dans la couronne 363. Chacun des conduits transversaux 364 communique avec un conduit longitudinal 365 ménagé dans le corps 344 parallèle à l'axe 341. Enfin, les conduits 365 longitudinaux débouchent respectivement dans l'une des chambres de travail 350, 351 pour commander le déplacement à translation selon l'axe 341, en va-et-vient, du piston secondaire 345.

Trois capteurs 366, 367, 368 étagés longitudinalement parallèlement à l'axe 341 et associés à un pion 369 portés par une tige 370 solidaire de la tête de centrage 342 permettent de contrôler le déplacement de celle-ci parallèlement à l'axe 341.

Le bras 334 porte quant à lui une structure apte à recevoir les moyens de brossage illustrés sur la figure 11 et suivantes.

Ces moyens support comprennent pour l'essentiel un fût cylindrique 380 centré sur un axe 381 parallèle à l'axe 101.

Un manchon 382 est fixé sur l'avant du manchon 380, c'est-à-dire vers la surface extérieure E de la paroi P. Le manchon 382 est centré sur l'axe 381. Il est muni sur son extrémité libre d'un joint à lèvres 383. Le joint 383 assure le confinement de l'espace délimité par le fût 380, le manchon 382 et la paroi extérieure E de la paroi P sur la périphérie d'un alésage taraudé T à brosser.

Le fût 380 est muni sur son extrémité arrière, comme illustré sur la figure 3 d'une bride annulaire 384 centrée sur l'axe 381. La bride 384 sert d'appui aux moyens de brossage. Elle est entourée d'une bague de serrage 385 susceptible de rotation autour de l'axe 381. L'entraînement à rotation de la bague de serrage 385 autour de l'axe 381 est commandé par une manette 386.

La bague de serrage 385 est munie sur l'arrière de la bride 384 d'une pluralité de saillies 387 en forme de secteurs de couronne dirigés vers l'axe 381. Les saillies 387 couvrent chacune un secteur angulaire limité complémentaire de celui-ci défini par des saillies homologues 790, 791, 792, prévues sur la périphérie extérieure du carter des moyens de brossage. L'homme de l'art comprendra aisément que cette disposition permet de fixer le carter des moyens de brossage sur la bride 384, à l'aide de la bague de serrage 385, à la façon d'un montage à baïonnette. En effet le carter des moyens de brossage est immobilé dans le fût 380, sur la bride 384, dès lors que les saillies 387 prévues sur la bague de serrage 385 recouvrent les saillies homologues 790, 791, 792 prévues sur le carter des moyens de brossage.

La bride 384 porte un joint d'étanchéité annulaire 388.

Par ailleurs, l'espace interne du manchon 382 et du fût 380 communique par l'intermédiaire d'une chambre étanche 389 formée dans le bras 334 avec une tubulure 390 destinée à être reliée à des moyens à dépression. Cette disposition permet d'aspirer efficacement l'ensemble des éléments brossés dans un alésage taraudé. La tubulure 390 peut être avantageusement fixée sur le bras 334 à l'aide d'un montage à baïonnette. Cette disposition classique en soi ne sera pas décrite plus en détail par la suite.

Le fonctionnement du châssis mobile 300 est le suivant.

Lors de l'engagement du châssis fixe 100 dans l'orifice O, en position rétractée des griffes 150, les pistons primaires et secondaires 344, 345 sont placés en position d'extension.

L'opérateur guide le châssis fixe 100 pour engager les deux têtes de centrage 342 dans des alésages taraudés T diamétralement opposés. Simultanément, les mors 113 sont portés en appui contre la surface extérieure E. Les griffes 150 sont alors déployées contre la surface intérieure I pour fixer le châssis.

On obtient ainsi un positionnement précis du châssis fixe 100 et du châssis mobile 300, centrés sur l'axe de l'orifice 0.

Dans cette position l'axe 381 du fût 380 coïncide précisément avec l'axe d'un alésage taraudé T à brosser. Les moyens de brossage supportés par le fût 380 peuvent alors procéder au brossage de cet alésage. Lorsque l'opération de brossage est terminée la brosse est retirée de l'alésage taraudé précité. De même les pistons 344 et 345 sont rétractés. Le châssis mobile 300 est alors entraîné à rotation autour de l'axe 101, par la came 323, d'un pas angulaire correspondant à l'écart angulaire défini entre deux alésages taraudés T. Les opérations d'extension des pistons 344 et 345 sont alors réitérés pour contrôler l'alignement de l'axe 381 du fût 380 avec l'axe de l'alésage taraudé suivant. Une nouvelle opération de brossage est alors opérée.

Le pas angulaire de rotation du châssis mobile 300 autour de l'axe 101 peut être contrôlé à l'aide d'un détecteur 391 porté par le carter 323. Le détecteur 391 est sensible au passage d'un pion excentré 392 porté par l'arbre de la came 323. On aperçoit également sur la figure 4 les détecteurs 190 portés par les supports 145 et destinés à détecter le déploiement en position de serrage des griffes 150 et de là à assurer la mise en service des témoins verts 179. On aperçoit en outre sur la figure 5 un tourillon 191 supportant un galet 174 sur l'une des griffes 150.

On aperçoit par ailleurs sur la figure 10 les conduites 392, 393 assurant l'entraînement du moteur pneumatique 394 dont l'arbre de sortie porte les pignons moteur 325. Les conduites 392, 393, tout comme les conduites 125, 126 se prolongent à l'intérieur du collecteur 175 pour aboutir à la plaque de raccordement 178.

On va maintenant décrire la structure des moyens de brossage proprement dits illustrés sur la figure 11 et suivantes.

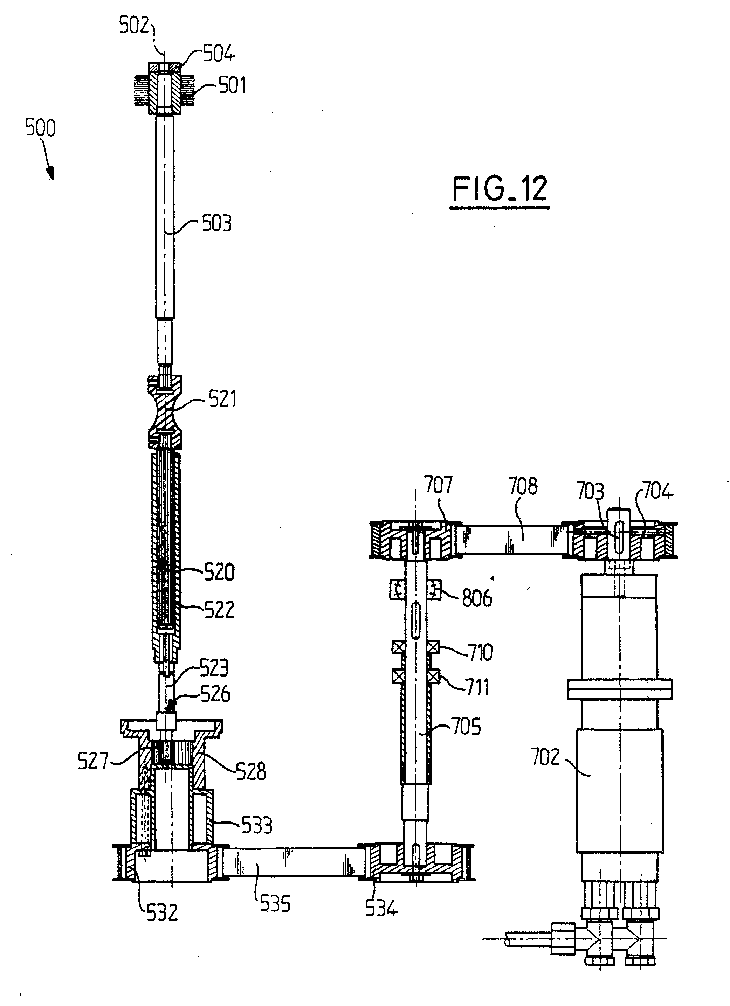

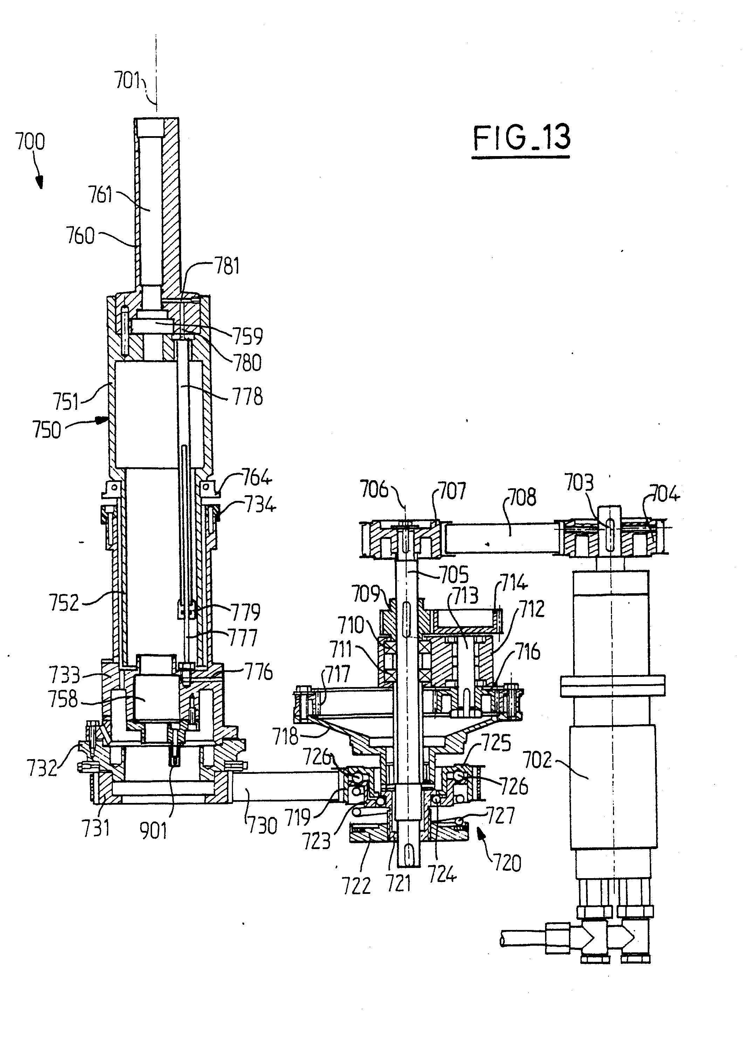

Comme indiqué précédemment, pour l'essentiel, ces moyens de brossage comprennent un équipage 500 illustré sur la figure 12, muni d'une brosse 501 et entraîné à rotation autour d'un axe principal 502 parallèle à l'axe de l'alésage taraudé T, et des moyens auxiliaires 700 illustré sur les figures 13 aptes à déplacer simultanément l'équipage 500 selon un mouvement hélicoïdal centré sur l'axe de l'alésage T.

L'équipage 500 et les moyens auxiliaires 700 sont logés dans un carter 800. La structure de ce carter 800, qui est susceptible de nombreux modes de réalisation ne sera pas décrite dans le détail par la suite.

On notera cependant que ce carter 800 comprend une pluralité de manchons 801, 802, 803 solidaires et coaxiaux, centrés sur l'axe 701 des moyens auxiliaires 700. Le carter 800 comprend de plus un élément référencé 804 sur la figure 11.

## MOYENS AUXILIAIRES 700

Les moyens auxiliaires 700 comprennent un moteur pneumatique 702 dont l'arbre de sortie 703 s'étend parallèlement à l'axe 101. L'arbre de sortie 703 porte une poulie 704.

L'élément 804 de carter supporte par ailleurs un arbre intermédiaire 705 à rotation autour d'un axe 706. L'axe 706 est parallèle à l'axe 701. L'arbre intermédiaire 705 est porté par un palier 808.

L'une des extrémités avant de l'arbre intermédiaire 705 porte une poulie 707. La poulie 707 est placée en regard de la poulie 704 et une courroie 708 relie les deux poulies 704, 707.

Un pignon moteur 709 est claveté sur l'arbre intermédiaire 705. L'arbre intermédiaire porte une paire de roulements 710, 711. Une pièce support de planétaire 712 est montée à rotation autour de l'axe 706 sur l'arbre 705 par l'intermédiaire des roulements 710, 711. La pièce 712 reçoit à rotation autour d'un axe parallèle à l'axe 706 un tourillon 713.

Le tourillon 713 porte sur son extrémité avant un pignon planétaire mené 714. Le pignon 714 engrène avec le pignon moteur 709. Il engrène également avec une couronne dentée 715 portée par l'élément 804 de carter.

En outre, le tourillon 713 porte sur son extrémité arrière un pignon planétaire menant 716. Le pignon 716 engrène avec une couronne dentée secondaire 717. Celle-ci est portée par un palier intermédiaire 718. Le palier intermédiaire 718 est guidé à rotation, par un roulement 809 guidé à rotation autour de l'arbre 705. Le palier intermédiaire 718 est relié à une poulie 719 par un système 720 de débrayage et limiteur de couple.

Pour cela le palier intermédiaire 718 comprend un prolongement tubulaire 721 entourant l'arbre intermédiaire 705 et libre de rotation par rapport à celui-ci.

L'extrémité du prolongement tubulaire 721 porte un écrou 722. L'écrou 722 est vissé sur le prolongement tubulaire 721 ; il lui est donc lié à translation et à rotation.

De plus, le prolongement tubulaire 721 porte un plateau d'entraînement 723.

Le plateau d'entraînement 723 est lié à rotation avec le prolongement tubulaire 721 par l'intermédiaire de billes 724. Par contre il est susceptible de translation axiale parallèlement à l'axe 706 par rapport au prolongement tubulaire 721.

Le plateau d'entraînement 723 est adjacent à un flasque 725 de la poulie 719. Des billes 726 sont intercalées entre le plateau d'entraînement 723 et le flasque 725. De plus un ressort 727 est intercalé entre l'écrou 722 et le plateau d'entraînement 723.

En fonctionnement normal, lorsqu'aucun couple résistant important n'est exercé sur la poulie 719, le ressort 727 qui pousse le plateau d'entraînement 723 en direction du flasque 725 permet l'entraînement de la poulie 719 par l'intermédiaire des billes 726.

Par contre, lorsqu'un couple résistant important est exercé sur la poulie 719, cette dernière reste immobile et les billes 726 autorisent une rotation relative entre le plateau d'entraînement 723 et le flasque 725 de la poulie.

Une courroie 730 engrène avec la poulie 719. La poulie 730 engrène par ailleurs avec une poulie 731.

Cette poulie 731 est centrée sur l'axe 701 des moyens auxiliaires 700. Par ailleurs, on notera que les manchons 801, 802 et 803 du carter 800 sont centrés sur cet axe 701.

La poulie 731 est fixée sur l'arrière d'un moyeu 732 également centré sur l'axe 701. De même le moyeu 732 est fixé sur l'arrière d'un arbre intermédiaire 733 centré sur l'axe 701. La poulie 731, le moyeu 732 et l'arbre intermédiaire 733 sont liés à rotation autour de l'axe 701.

L'arbre intermédiaire 733 est pourvu sur son extrémité avant d'un moyeu cannelé 734, centré sur l'axe 701. Le moyeu 734 possède sur sa périphérie interne une pluralité de cannelures longitudinales, parallèles à l'axe 701 qui coopèrent avec une vis principale 750.

La vis 750 s'étend pour l'essentiel parallèlement à l'axe 701.

Elle possède plus précisément une section avant 751 pourvue d'un filetage sur sa périphérie externe et une section arrière 752 pourvue de cannelures longitudinales sur sa périphérie externe.

Les cannelures longitudinales, parallèles à l'axe 701 ménagées sur la périphérie externe de la section 752, viennent en prise avec le moyeu cannelé 734. Ainsi, la vis 750 et le moyeu cannelé 734 sont liés à rotation autour de l'axe 701. Par contre, la vis 751 peut se déplacer à translation parallèlement à l'axe 701 par rapport au moyeu cannelé 734.

La section filetée 751 de la vis 750 vient en prise avec un écrou 753 centré sur l'axe 701 et immobilisé sur le carter 800 entre les moyens 801 et 802.

Le moyeu cannelé 734, l'arbre intermédiaire 733, le moyeu 732 et la poulie 731 sont guidés à rotation dans le carter 800, autour de l'axe 701, dans les paliers 754 et 755, tout en étant immobilisés à translation dans le carter 800.

Par contre, la vis 750 peut se déplacer parallèlement à l'axe 701 dans le carter 800. Elle est guidée grâce à la coopération des cannelures 752 et du moyeu cannelé 734, et à l'engagement filetage 751/écrou 753. De plus, l'extrémité avant de la vis 750 est guidée dans un palier 756 porté par le carter 800.

Ainsi, l'homme de l'art comprendra aisément que l'entraînement à rotation de la poulie 731 assure la rotation du moyeu cannelé 734 et de là, grâce à la coopération définie entre le filetage 751 et l'écrou 753, l'entraînement de la vis 750 selon un mouvement hélicoïdal centré sur l'axe 701. Le pas de déplacement de la vis 750 correspond au pas du filetage 751.

L'arbre intermédiaire 733 et la vis 750 possèdent des alésages internes 758, 759 centrés sur un axe commun excentré par rapport à l'axe 701 et coïncidant avec l'axe 502 de la brosse.

Plus précisément encore selon le mode de réalisation illustré sur la figure 11 et suivantes, la vis 750 se prolonge vers l'avant, c'est-à-dire à l'opposé de la poulie 731 par un canon 760 généralement cylindrique. L'enveloppe extérieure du canon 760 est centrée sur l'axe 701. Le canon 760 possède par ailleurs un canal cylindrique 761 centré sur l'axe 502 de la brosse et prolongeant l'alésage 759 précité.

Le déplacement hélicoïdal de la vis 750, centré sur l'axe 701 est contrôlé par deux détecteurs 762, 763 et une came annulaire 764.

Les capteurs 762, 763 sont supportés par l'élément de carter 802. Ils sont espacés parallèlement à l'axe 701. La came annulaire 764 est supportée par la vis 750 entre la section filetée 751 et la section à cannelures longitudinales 752.

## EQUIPAGE BROSSANT 500

Cet équipage 500 comprend un arbre 503 centré sur l'axe 502 et qui porte en extrémité la brosse 501. La brosse 501 est fixée sur l'arbre 503 à l'aide d'un écrou 504. On notera à l'examen des figures 11 et 12 annexées que les poils de la brosse 501 s'étendent radialement par rapport à l'axe 502.

Comme indiqué précédemment, à l'utilisation, l'axe 502 s'étend parallèlement à l'axe de l'alésage taraudé T à broser.

L'arbre 503 est guidé à rotation, autour de l'axe 502, dans les logements 761 et 759 ménagés dans le canon 760 et la vis 750.

L'arbre 503 est guidé à rotation autour de l'axe 502 grâce à deux douilles à aiguilles 505, 506 placées respectivement aux extrémités de l'arbre 503 et supportées l'une dans l'alésage 759, l'autre dans l'alésage 761. Par ailleurs, l'arbre 753 est immobilisé à translation sur la vis 750 grâce à une paire de butées à aiguilles 507, 508 placées respectivement de part et d'autre d'une toile annulaire 765 transversale à l'axe 701 et solidaire de la vis 750.

La butée avant 508 repose contre une rondelle 509. La rondelle 509 repose contre une entretoise 510 et la rondelle 510 repose contre un décrochement 511 en forme de couronne ménagée sur l'arbre 503 et dirigée vers l'arrière du dipositif de brossage, c'est-à-dire à l'opposé de la brosse 501. Par ailleurs, la butée 507 repose contre une rondelle 512 immobilisée sur l'extrémité arrière de l'arbre 503 à l'aide d'un écrou 513.

L'arbre 503 se prolonge vers l'arrière par un arbre cannelé 520. L'arbre cannelé 520 est centré sur l'axe 502. Les arbres 503 et 520 sont reliés par l'intermédiaire d'un accouplement élastique 521.

L'arbre cannelé 520 est engagé dans un manchon cannelé complémentaire 522. Le manchon 522 est centré sur l'axe 502.

Ainsi, l'arbre cannelé 520 et le manchon cannelé 522 sont liés à rotation autour de l'axe 502, mais libres de translation relative parallèlement à l'axe 502.

Le manchon cannelé se prolonge vers l'arrière par un tourillon 523. Le tourillon 523 est centré sur l'axe 502. Il est lié à rotation et à translation avec le manchon 522. Le tourillon 523 et donc le manchon cannelé 522 sont guidés à rotation autour de l'axe 502 sur l'arbre intermédiaire 733 à l'aide d'une paire de roulements à billes 524, 525.

Les roulements 524, 525 sont logés dans l'alésage 758 précité. Le roulement 524 repose contre une rondelle immobilisée sur le tourillon 523 à l'aide d'un écrou. Le roulement 525 arrière repose contre un décrochement 526 en forme de couronne ménagée sur le tourillon 523 et dirigée vers l'avant en direction de la brosse 501.

L'extrémité arrière 527 du tourillon 523 est pourvu de cannelures longitudinales parallèles à l'axe 502. Ces cannelures engrènent avec des cannelures complémentaires ménagées sur l'alésage interne d'un pignon 535. Le pignon 535 est centré sur l'axe 502. Il est lié à rotation avec le tourillon 523 tout en étant libre de débattement axial sur le tourillon. Le pignon 535 à denture extérieure droite engrène avec une couronne dentée 528. La couronne dentée 528 est pourvue de cannelures longitudinales parallèles à l'axe 701 et centrées sur celui-ci.

La couronne dentée 528 est guidée à rotation autour de l'axe 701 sur le moyeu 732 à l'aide d'une douille à aiguilles 529.

Par ailleurs, la couronne dentée 528 est immobilisée à translation selon l'axe 701 sur le moyeu 732 à l'aide d'une paire de butées à aiguilles 530, 531.

La couronne dentée 528 est solidaire d'une poulie 532. Plus précisément, une entretoise 533 est intercalée entre la couronne dentée 528 et la poulie 532. La couronne dentée 528, la poulie 532 et l'entretoise 533 sont symétriques de révolution autour de l'axe 701. Elles sont liées à rotation et à translation.

Il est par ailleurs prévu une poulie 534 solidaire de l'extrémité arrière de l'arbre 705. La poulie 534 est disposée sur l'arrière de l'écrou 722 servant d'appui au ressort 727.

Une courroie 535 relie les poulies 532 et 534.

Lorsque le moteur pneumatique 702 est mis en service le mouvement de rotation est transmis à la poulie 704, à la courroie 708, à la poulie 707, à l'arbre 705, à la poulie 534, à la courroie 535, à la poulie 532 et de là à l'entretoise 533 et à la couronne dentée 528.

La couronne dentée 528 est donc entraînée à rotation autour de l'axe 702.

Simultanément le mouvement de rotation de l'arbre 705 est transmis (par l'intermédiaire du pignon 709, du pignon 714, du pignon 716 et de la couronne 717) à l'écrou 722, au plateau 723, par l'intermédiaire des billes 726 à la poulie 719 et de là à la courroie 730, à la poulie 731 et donc au moyeu 732, à l'arbre intermédiaire 733, au moyeu cannelé 734 et donc à la vis 750.

De ce fait, l'arbre intermédiaire 733 et la vis 750 sont simultanément entraînés à rotation autour de l'axe 701.

Cependant, en raison de la présence du train épicycloïdal 713, 714, 716 intercalé sur l'entraînement de l'arbre intermédiaire 733, ce dernier et la vis 750 qui lui est liée à rotation, tournent autour de l'axe 701 à une vitesse inférieure à la vitesse de rotation de la couronne dentée 528.

Au cours de la rotation de l'arbre intermédiaire 733 et de la vis 750 autour de l'axe 701, l'axe des alésages 758, 759 et 761 décrit une révolution autour de l'axe 701 dont le rayon correspond à l'excentrement défini entre les axes 701 et 502. Il en résulte que l'arbre 503, le manchon cannelé 522 et le tourillon 523, dont l'axe 502 coïncide avec l'axe des logements 758, 759 et 761 décrit également un mouvement de révolution autour de l'axe 701. Au cours de cette révolution de l'axe 502 autour de l'axe 701 le pignon 535 reste constamment en prise avec la couronne dentée 528 pour entraîner la brosse 501 à rotation, selon un mouvement rapide, autour de l'axe 502. Par ailleurs, ccmme indiqué précédemment, la rotation de l'arbre intermédiaire 733 autour de l'axe 701, qui est communiquée à la vis 750, en prise avec l'écrou 753, entraîne la vis 750 selon un mouvement hélicoïdal centré sur l'axe 701. Ce mouvement hélicoïdal est transmis à l'arbre 503 qui porte la brosse 501. L'arbre 503 est immobilisé à translation sur la vis 750 grâce aux butées 507, 508.

En résumé, lorsque le moteur 702 est mis en service la vis 750 est animée d'un mouvement hélicoïdal centré sur l'axe 701. Ce mouvement est transmis à la brosse 501 guidée à rotation autour de l'axe 502 parallèle à l'axe 701. Simultanément la brosse 501 est entraînée à grande vitesse autour de son axe 502. De préférence, le pas de l'écrou 753 en prise avec la section filetée 751 de la vis 750 correspond au pas du taraudage de l'alésage T à brosser. Ainsi, la brosse 501 décrit un mouvement hélicoïdal qui suit les filets de l'alésage T.

Pour faciliter l'élimination des poussières brossées et devant être aspirées par l'intermédiaire de la tubulure 390, de préférence de l'air est insuflé dans l'axe de la brosse 501. L'alimentation en air sous pression nécessaire à cet effet est réalisée par l'intermédiaire d'un conduit collecteur 770 pourvu d'un connecteur 771. Un conduit 772 relié au connecteur 771 traverse le collecteur 770 et aboutit à un régleur de débit 773. Un conduit 774 part du régleur de débit 773 et aboutit à une tubulure 775 supportée par l'élément 803 de carter. La tubulure 775 débouche dans une gorge annlaire 805 centrée sur l'axe 701 ménagée sur la périphérie interne de l'élément 803 de carter. La gorge annulaire 805 est adjacente à la périphérie de l'arbre intermédiaire 733. L'élément 803 de carter porte par ailleurs deux joints toriques 806, 807 disposés respectivement de part et d'autre de la gorge annulaire 805 et reposant contre la périphérie externe de l'arbre intermédiaire 733. L'arbre intermédiaire 733 est pourvu d'un conduit borgne 776 s'étendant radialement par rapport à l'axe 701. Le conduit 776 débouche dans la gorge 805. Le conduit 776 se prolonge par un tube 777 s'étendant parallèlement à l'axe 701, vers l'avant du dispositif de brossage, c'est-à-dire en direction de la brosse 701. Le tube 777 est porté par l'arbre intermédiaire 733. Il est lié à rotation avec celui-ci.

Le tube 777 est engagé de façon télescopique dans un tube coulissant 778 porté par la toile 765 de la vis 750. Une liaison étanche 779 est définie entre les deux tubes 777, 778. Le tube coulissant 778 s'étend vers l'arrière parallèlement à l'axe 701. Il se prolonge vers l'avant par un conduit 780 ménagé dans le canon 760. Le conduit 780 communique avec un conduit 781 ménagé dans le canon 760. Le conduit 781 s'étend radialement par rapport à l'axe 502. Il débouche dans une gorge annulaire ménagée sur la périphérie interne du canon 760 dans le logement 761. Cette gorge annulaire est adjacente à la périphérie extérieure de l'arbre 503.

Le canon 760 porte deux joints toriques respectivement de part et d'autre de la gorge annulaire précitée. Ces joints toriques reposent contre la périphérie de l'arbre 503.

Par ailleurs, l'arbre 503 est pourvu d'un canal central longitudinal qui débouche, d'une part, à son extrémité avant adjacente à la brosse 501, à travers l'écrou 504, d'autre part, au voisinage de son extrémité arrière dans un conduit radial qui lui-même débouche dans la gorge annulaire ménagée dans le canon 760 et en communication avec le conduit 781.

Ainsi, l'air sous pression appliqué par l'intermédiaire du connecteur 771, dans le conduit 772, après avoir franchi le régleur de débit 773 est guidé par le conduit 774, la tubulure 775, la gorge 805, le conduit 776, le tube 777, le tube 778, le conduit 780 et le conduit 781, la gorge annulaire ménagée dans le canon 760 et les canaux ménagés dans l'arbre 503.

La coopération de la gorge 805 et du conduit radial 776 autorise l'alimentation du tube 777 quelle que soit la position à rotation de l'arbre intermédiaire 733. La coopération télescopique des tubes 777, 778 autorise l'alimentation du tube 778 quelle que soit la position relative selon l'axe 701 de l'arbre intermédiaire 733 et de la vis 750.

Enfin, la coopération de la gorge annulaire ménagée dans le canon 760 avec le canal radial ménagé dans l'arbre 503 autorise l'alimentation de ce dernier quelle que soit la position à rotation de la brosse 501 autour de l'axe 502.

On aperçoit également sur les figures annexées les conduits 782, 783 assurant l'alimentation du moteur pneumatique 702. Ces conduits 782, 783 logés dans le collecteur 770 aboutissent au connecteur 771.

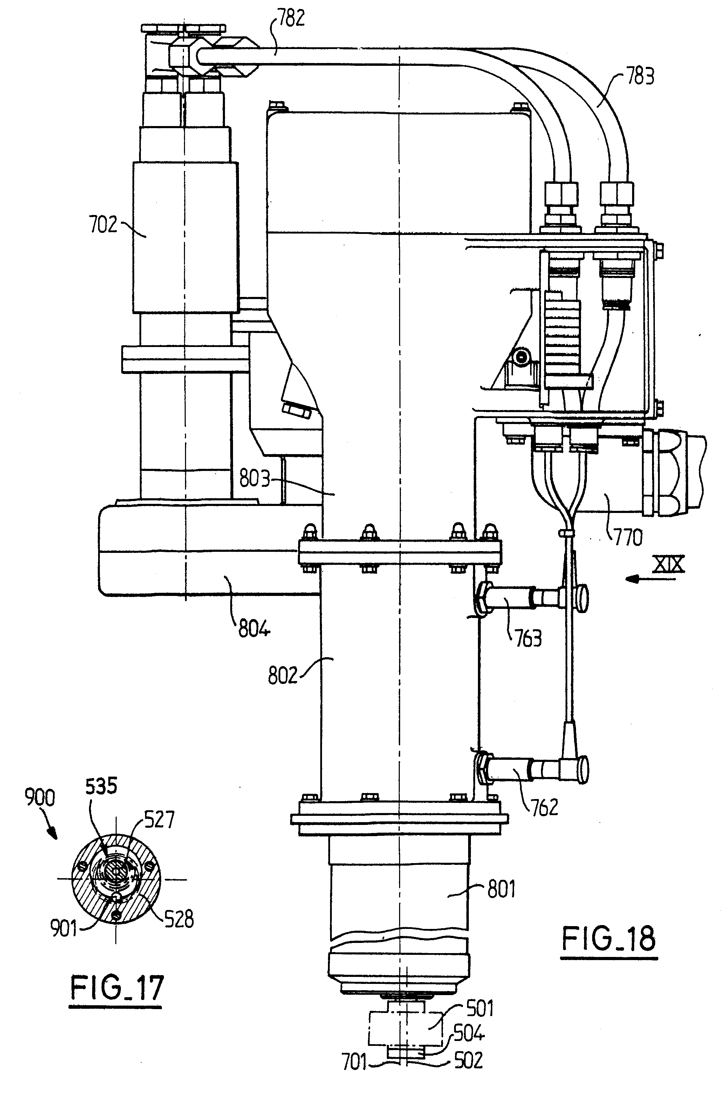

Il est par ailleurs prévu une lubrification des paliers du dispositif. Le circuit de lubrification comprend une pompe à huile 900 illustrée schématiquement sur la figure 17 et qui comprend pour l'essentiel le pignon 535 monté sur le tourillon 523 et en prise avec la couronne dentée 528. La pompe à huile comprend par alleurs un croissant 901 logé sans jeu dans l'espace interne de la couronne dentée 528. Le croissant s'étend parallèlement à l'axe 701. Son axe de symétrie est diamètralement opposé à l'axe 502 de l'équipage brossant par rapport à l'axe 701. Le croissant 901 est fixé sur l'arrière de l'arbre intermédiaire 733 pour être lié à rotation avec celui-ci.

L'arbre intermédiaire 733 définit par ailleurs deux conduits qui débouchent respectivement de part et d'autre du croissant 901.

De façon classique en soi, ces deux conduits servent respectivement d'entrée et de sortie au système de pompe à huile 900, l'huile étant mise en circulaton par la rotation du pignon 535 à l'intérieur de la couronne dentée 528.

Le conduit de sortie de la pompe à huile 900 communique avec un conduit longitudinal 902 ménagé dans l'arbre intermédiaire 733. Le conduit 902 débouche dans un tube 903. Le tube 903 s'étend parallèlement à l'axe 701 en direction de la brosse 501. Il est porté par l'arbre intermédiaire 733 et lié à rotation avec celui-ci.

Le tube 903 est engagé de façon télescopique dans un tube 904. Le tube 904 est porté par la toile 765 de la vis 750. Il s'étend parallèlement à l'axe 701 en éloignement de la brosse 501. Une liaison d'étanchéité 905 est définie entre les tubes 903 et 904.

Le tube 904 débouche par l'intermédiaire d'un conduit 906 ménagé dans le canon 760, dans la chambre 761, c'est-à-dire sur la périphérie de l'arbre 503.

Le retour de l'huile en direction de la pompe à huile 900 est assuré par un conduit longitudinal 907 ménagé parallèlement à l'axe 701 dans le canon 760.

L'entrée des conduits 907 débouche dans la chambre 761 en avant de la douille 506. La sortie du conduit longitudinal 907 débouche, d'une part, axialement dans l'arrière de la chambre 761 pour lubrifier les butées 507, 508 et la douille 505 ainsi que les roulements 524, 525, d'autre part, radialement sur l'extérieur du canon 760 en avant de l'écrou 753 pour lubrifier la liaison écrou 753/vis 751, le roulement 754 et le moyeu cannelé 734.

Par ailleurs, la sortie de la pompe à huile 900 débouche en arrière du roulement 525 dans un ensemble de conduits radial et axial ménagé dans le tourillon 523. L'entrée de cet ensemble de conduits débouche entre le manchon cannelé 522 et l'arbre cannelé 520 pour lubrifier la liaison entre ceux-ci.

Lors de l'assemblage des moyens de brossage illustrés sur les figures 11 et suivantes, sur le châssis mobile 300, l'élément 801 le plus avant du carter 800 est engagé dans le manchon 380.

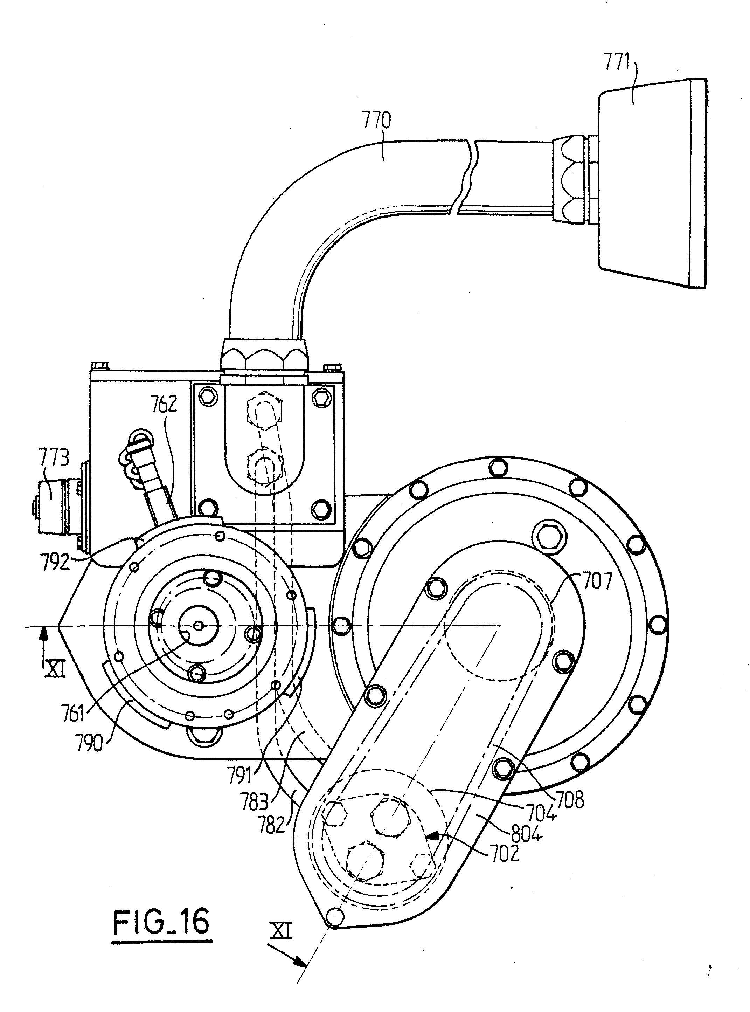

L'écrou 753, comme illustré sur la figure 16, est pourvu d'une pluralité de saillies 790, 791, 792 émergeant sur l'extérieur du carter 800. Les saillies 790, 791 et 792 sont formées de secteurs de couronne centrés sur l'axe 701. Elles sont complémentaires des saillies 387 prévues sur la bague de serrage 385.

Ainsi, pour fixer les moyens de brossage illustrés sur le figures 11 et suivantes, sur le manchon 380, il suffit d'engager l'avant 801 du carter 800 à l'intérieur du manchon 380, en veillant à décaler angulairement les saillies 790, 791, 792 du carter 800 par rapport aux saillies 387 de la bague de serrage 385. Lorsque les saillies 790, 791 et 792 reposent contre la bride 388 la bague de serrage 385 est entraînée à rotation autour de l'axe 381 à l'aide de la manette 386. Les moyens de brossage sont alors immobilisés fermement par montage à baïonnette.

L'homme de l'art comprendra aisément à la lecture de la description qui précède qu'une fois le châssis fixe 100 fixé dans l'orifice O, le fonctionnement de l'appareil conforme à la présente invention peut être piloté entièrement en automatique. En effet l'entraînement en rotation du châssis mobile 300, l'actionnement des vérins auto-centreurs 340 et la mise en service du moteur pneumatique 702 peuvent être pilotés par un automate programmable.

De plus, le dispositif conforme à la présente invention permet de brosser des alésages taraudés de pas différents en adaptant simplement le pas de la vis 750 et de l'écrou 753 à l'alésage à brosser. Dans le cas où la section des alésages taraudés varie, il est bien entendu nécessaire d'adapter l'arbre intermédiaire 733, la vis 750 et la couronne 528 de telle sorte que le rayon de rotation de l'axe principal 502 corresponde à la section de l'alésage.

Bien entendu, la présente invention n'est pas limitée au mode de réalisation particulier qui vient d'être décrit mais s'étend à toute variante conforme à son esprit.

## Revendications

1. Dispositif de brossage d'alésages taraudés caractérisé par le fait qu'il comprend un équipage (100) muni d'une brosse (501), entraîné en rotation autour d'un axe principal (502) parallèle à l'axe (A-A) de l'alésage taraudé, et des moyens auxiliaires (700) aptes à déplacer simultanément l'équipage (100) selon un mouvement hélicoïdal centré sur l'axe de l'alésage.

2. Dispositif de brossage selon la revendication 1, caractérisé par le fait que l'équipage (100) muni de la brosse (501) et les moyens auxiliaires (700) sont entraînés en rotation par les mêmes moyens moteurs.

3. Dispositif de brossage selon l'une des revendications 1 ou 2, caractérisé par le fait que l'équipage (100) muni de la brosse (501) et les moyens auxiliaires (700) sont entraînés en rotation par des moyens moteurs pneumatiques.

4. Dispositif de brossage selon l'une des revendications 1 à 3, caractérisé par le fait qu'un système de débrayage limiteur de couple (720) est inséré sur la chaîne de transmission de mouvement des moyens auxiliaires (700).

5. Dispositif de brossage selon la revendication 4, caractérisé par le fait que le système de débrayage limiteur de couple (720) comprend un plateau moteur (723), un plateau mené (725) des billes intercalées entre le plateau moteur (723) et le plateau mené (725) et des moyens élastiques (727) sollicitant le plateau moteur (723) et le plateau mené (725) en rapprochement.

6. Dispositif de brossage selon l'une des revendications 1 à 5, caractérisé par le fait que les moyens auxiliaires (700) sont entraînés en rotation par l'intermédiaire d'un train épicycloïdal (713, 714, 716).

7. Dispositif de brossage selon l'une des revendications 1 à 6, caractérisé par le fait que les moyens auxiliaires (700) comprennent une vis (750) dont l'axe (701) coïncide avec l'axe de l'alésage taraudé à brosser, la vis (750) étant entraînée à rotation autour de son axe (701), engrènant avec un écrou (753), porté par un carter fixe et portant l'équipage (500) à rotation autour de l'axe principal (502), parallèle à l'axe de l'alésage et excentré par rapport à celui-ci, de telle sorte que l'axe principal (500) de rotation de l'équipage décrive une révolution autour de l'axe de l'alésage taraudé.

8. Dispositif de brossage selon la revendication 7, caractérisé par le fait que la vis (750) est pourvue , sur une partie de sa longueur, de cannelures longitudinales (752) qui engrènent avec un arbre moteur (733) pourvu de cannelures longitudinales complémentaires (734) pour assurer d'une part une liaison à rotation entre la vis (750) et l'arbre (733), d'autre part une liberté de translation entre la vis (750) et l'arbre (733).

9. Dispositif de brossage selon l'une des revendications 7 ou 8, caractérisé par le fait que la vis (750) est munie d'un alésage excentré (759, 761) destiné à recevoir l'équipage (500).

10. Dispositif de brossage selon la revendication 9, caractérisé par le fait que l'équipage (500) comprend un arbre (503) support de brosse guidé à rotation dans l'alésage excentré (759, 761) de la vis (750) et immobilisé à translation sur celle-ci.

11. Dispositif de brossage selon l'une des revendications 1 à 10, caractérisé par le fait que l'équipage (500) comprend un arbre (503) support de brosse pourvu de cannelures longitudinales qui engrènent avec des cannelures complémentaires prévues sur un arbre moteur (522) pour assurer d'une part une liaison à rotation entre l'arbre support de brosse (503) et l'arbre moteur (522), d'autre part une liberté de translation entre l'arbre support de brosse (503) et l'arbre moteur (522).

12. Dispositif de brossage selon la revendication 7, caractérisé par le fait que de l'air sous pression est dirigé vers la brosse (501) par l'intermédiaire de tubes télescopiques (777, 778) solidaires respectivement de la vis (750) et de l'arbre moteur (733).

13. Dispositif de brossage selon l'une des revendications 1 à 12, caractérisé par le fait que l'équipage (500) comprend un tourillon (523) pourvu d'un pignon denté (535) centré sur l'axe principal (502), qui engrène avec une couronne dentée (528), motrice, centrée sur l'axe (701) de l'alésage taraudé.

14. Dispositif de brossage selon les revendications 7 et 13 prises en combinaison, caractérisé par le fait qu'il est prévu un circuit de lubrification comprenant deux conduits télescopiques (903, 904) solidaires respectivement de la vis (750) et de l'arbre moteur (733) associé, et une pompe à huile formée par le pignon denté (535) et la couronne dentée associée (528).

15. Dispositif support de moyens de brossage par exemple selon l'une des revendications 1 à 14 destiné à être fixé dans un orifice ménagé dans une paroi, caractérisé par le fait qu'il comprend un châssis fixe (100) portant d'une part, un système de mors (113) adapté pour venir en appui contre une première surface (E) de la paroi, d'autre part, une pluralité de griffes (150) associées à des moyens d'entraînement (124, 128, 129, 123, 120, 131 , 140) aptes à déplacer les griffes (150) entre une position de repos escamotée dans laquelle les griffes (150) peuvent traverser librement l'orifice (O) et une position de travail en extension dans laquelle les griffes (150) viennent en appui contre la seconde surface de la paroi, sur la périphérie de l'orifice.

16. Dispositif support selon la revendication 15, caractérisé par le fait qu'il comprend de plus un châssis mobile (300) qui porte les moyens de brossage (500, 700), le châssis mobile (300) étant supporté libre de rotation autour de l'axe de l'orifice (O) par le châssis fixe (100) précité, ainsi que des moyens d'entraînement secondaires (394, 323, 332) aptes à assurer un pivotement contrôlé du châssis mobile (300) autour de l'axe de l'orifice.

17. Dispositif support selon l'une des revendications 15 ou 16, caractérisé par le fait que les griffes (150) sont articulées sur le châssis fixe (100) et entraînées en déplacement par des bielles élastiques (140) elles-mêmes articulées sur un plateau (130) entraîné à translation parallèlement à l'axe de l'orifice.

18. Dispositif support selon la revendication 17, caractérisé par le fait que le plateau (130) est entraîné à translation parallèlement à l'axe de l'orifice par un écrou (131) en prise avec une vis (120) entraînée à rotation par un moteur pneumatique (124).

19. Dispositif support selon l'une des revendications 15 à 18 , caractérisé par le fait qu'il comprend un mécanisme de retrait d'urgence (151, 152, 153, 160, 161) adapté pour autoriser un retour rapide des griffes (150) de la position de travail en extension dans la position de repos escamotée en cas de déficience des moyens d'entraînement.

20. Dispositif support selon la revendication 19, caractérisé par le fait que le mécanisme de retrait d'urgence comprend des leviers (152, 153) articulés sur le châssis fixe (100) et servant de support articulé aux griffes (150) et des moyens d'arrêt escamotables (160, 161) qui interdisent normalement le pivotement des leviers (152, 153).

21. Dispositif support selon la revendication 20, caractérisé par le fait que les moyens d'arrêt escamotables (160, 161) comprennent des billes guidées dans des logements oblongs (166, 167) formés dans un plateau (162) susceptible de translation parallèlement à l'axe de l'orifice et pourvu de cavités (168, 169) aptes à recevoir les billes pour autoriser le pivotement des leviers.

22. Dispositif support selon l'une des revendications 19 ou 20, caractérisé par le fait que en position normale d'utilisation, l'axe d'articulation des griffes (150) sur les leviers (152, 153) est situé radialement à l'intérieur de l'axe d'articulation des leviers (152, 153) sur le châssis fixe (100) par rapport à l'axe de l'alésage.

23. Dispositif support selon l'une des revendications 15 à 22 prises en combinaison avec la revendication 16, caractérisé par le fait que le châssis mobile (300) supporte au moins un vérin autocentreur et de contrôle (340) apte à pénétrer dans un alésage taraudé (T) ménagé sur la périphérie de l'orifice, et un support (380) de moyens de brossage.

24. Dispositif support selon la revendication 23, caractérisé par le fait que chaque vérin autocentreur (340) est formé de deux vérins montés en cascade (343, 344 ; 344, 345) pour permettre de déplacer une tête de centrage entre trois positions.

25. Dispositif support selon l'une des revendications 23 ou 24, caractérisé par le fait que le support (380) de moyens de brossage est pourvu de moyens de fixation à baïonnette.

0282388

FIG_1A

FIG. 1B

100,300

0282388

0282388

FIG. 2

FIG_3

0282388

FIG_4

FIG_5

FIG_7

FIG_6

0282388

FIG_8

FIG_9

FIG_10

0282388

FIG.11

0282388

FIG_12

0282388

FIG. 13

FIG_14

FIG_15

0282388

FIG.16

0282388

782
783
702
803
804
802
770
XIX
763
762
801
501
504
502
701

FIG_18

900
535
527
528
901

FIG_17

0282388

FIG_19

FIG_20

0282388

position
déserrée

174

S191

U191

150

150

F_B

U146

174

174

I

position serrée

U155

155

F_B

F_A

position
retrait
d'urgence

O

-P-

F_S

150

FIG-21

155

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 512 358  (VOIGT) <br> * En entier * <br> --- | 1,3 | B 08 B    1/04 <br> B 23 G    1/32 |
| Y | US-A-4 125 057  (COX) <br> * Résumé; figures * <br> --- | 1,3 | |
| A | FR-A-2 490 533  (MILLY) <br> * Page 2, figures 1-4 * <br> --- | 1 | |
| A | BROCHURE DE LA FIRME, H. Burgsmüller & Söhne GmbH, Kreiensen, DE; "Whirling – The modern machining technique" <br> * Dernière page * <br> --- | 1 | |
| A | CH-A-  615 105  (BELLMANN) <br> ----- | | |

**DOMAINES TECHNIQUES RECHERCHES (Int. Cl.4)**

B 08 B
B 23 G

**Le présent rapport a été établi pour toutes les revendications**

| Lieu de la recherche | Date d'achèvement de la recherche | Examinateur |
|---|---|---|
| LA HAYE | 31-05-1988 | VOLLERING J.P.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P0402)